# EUROPEAN PATENT APPLICATION

(11) **EP 1 719 808 A2**
(43) Date of publication of application: **08.11.2006**
(21) Application number: 06009360.6
(22) Date of filing: 05.05.2006
(51) Int. Cl.: C09J 7/02

(54) **Pressure sensitive adhesive laminates**

(30) Priority: 06.05.2005 US 678620 P; 11.07.2005 US 178848; 11.07.2005 US 178849; 04.04.2006 US 397648; 04.04.2006 US 397816
(71) Applicant: EASTMAN CHEMICAL COMPANY, Kingsport, TN 37660 (US)
(72) Inventor: Lane, Richard, Voorschoten 2251 JT (NL); Bamborough, Derek William, Nieuw en Sint Joosland 4300 AP (NL); Kirchner-Paree, Magdalena Elizabeth Cornelia, s-Heer Abtskerke, 4444 AH (NL); Stevels, Willem Marinus, Middelburg 4332 DV (NL); Klosiewicz, Daniel William, Kingsport Tennessee 37664 (US); Luth, Roelof Jacob, Middleburg 4336 GB (NL)
(74) Representative: Best, Michael

(57) **Abstract**

A PSA laminate is provided comprising: a) at least one outer filmic layer (A) comprising at least one filmic polymer; b) at least one adhesive base layer (B) comprising at least one adhesive base polymer; and c) at least one tackifier layer (C) comprising at least one tackifier and at least one polymer; wherein the pressure sensitive adhesive laminate is obtainable by co-extruding the outer filmic layer (A) with the adhesive base layer (B) to produce a non-adhesive laminate and applying the tackifier layer (C) to the adhesive base layer side of the non-adhesive laminate to produce the PSA laminate. Processes for producing the PSA laminate, and articles comprising the PSA laminate are also provided.

## Description

### Field of Invention

The present invention relates to coextruded non-adhesive laminates and pressure sensitive adhesive (PSA) laminates. The present invention also relates to processes for producing the non-adhesive laminates and PSA laminates. Articles of manufacture are also provided including, but not limited to, tapes, labels, protective films, signs, decals, and the like.

### Background of the Invention

Generally, pressure sensitive adhesive laminates comprise at least one polymeric component, at least one tackifier component, and at least one plasticizer. These components are then physically mixed together using heat, water, or solvents. These pressure-sensitive adhesive (PSA) laminates are used in such articles of manufacture for example as labels, tapes, decals, signs, and the like. PSA labels are commonly used to apply printed information to an object or article. PSA labels typically comprise a release liner, a PSA layer disposed onto the release liner, and an outer layer which may be a filmic polymer laminated onto the PSA layer. Such laminates may be formed by first coating or laminating the PSA to the release liner, then laminating the outer layer onto the PSA-coated liner; or alternatively by coating or laminating the PSA to the outer layer, then the PSA-coated outer layer onto the release liner. The outer layer is typically made of plastic, which is printed on with information or other indicia either before or after the outer layer is laminated to the PSA and liner.

There are research efforts in the industry to improve the adhesive properties of PSA laminates and the processes for producing such laminates. Coextrusion has been utilized to coextrude the outer filmic layer and the pressure sensitive adhesive, however, processing problems have occurred, such as, adherence to equipment rollers. To prevent the PSA laminate from sticking to the equipment rollers, a release liner can be required which is laminated to the PSA laminate immediately after the co-extrusion process.

There is a need in the industry for improved processes for producing PSA laminates as well as laminates with improved properties.

### Summary of the Invention

In accordance with one embodiment of this invention, a PSA laminate is provided comprising:
a. at least one outer filmic layer (A) comprising at least one filmic polymer;
b. at least one adhesive base layer (B) comprising at least one adhesive base polymer; and
C. at least one tackifier layer (C) comprising at least one tackifier and at least one polymer;
wherein the pressure sensitive adhesive laminate is obtainable by co-extruding the outer filmic layer (A) with the adhesive base layer (B) to produce a non-adhesive laminate and applying the tackifier layer (C) to the adhesive base layer side of the non-adhesive laminate to produce the PSA laminate.

In accordance with another embodiment of this invention, a process to produce the PSA laminate is provided. The process comprises co-extruding at least one outer filmic layer (A) comprising at least one filmic polymer and at least one adhesive base layer (B) comprising at least one adhesive base polymer to produce the non-adhesive laminate and applying at least one tackifier layer (C) to the adhesive base layer side of the non-adhesive laminate to produce the PSA laminate; wherein the tackifier layer comprises at least one tackifier and at least one polymer.

The present invention is based on the discovery that a non-adhesive laminate comprising at least one filmic outer layer (A) and at least one adhesive base layer (B) can be converted into a PSA laminate by applying at least one tackifier layer (C) to the adhesive base layer side of the non-adhesive laminate. Surprisingly, it has been found that by implementing this approach, a PSA laminate can be obtained with at least one of the following advantages over PSA laminates manufactured by conventional processes.

First, the adhesive base polymer of the adhesive base layer (B) is coextruded onto the outer filmic layer (A) thus forming a coextruded melt bond thereby improving the anchorage of the adhesive base polymer onto the outer filmic layer. This can eliminate any offsetting that can occur with a normally manufactured filmic label PSA. Offsetting is the undesirable transfer of adhesive to a substrate during label removal caused by insufficient anchorage of the adhesive onto the filmic label substrate. Furthermore, this implies that any bond of the PSA laminate with a substrate during use of the PSA laminate will fail at the substrate interface or internally, i.e. cohesive failure. The advantage of this type of failure is that it allows suitable formulations to be made to result in cohesive failing, tamper evident bonds suitable for security, tamper proof labeling; for adhesion, interface failure mode, removable PSA laminate applications; or for re-positioning and resealing applications. Finally, the coextruded melt bond of the filmic polymer and the adhesive base layer eliminates the presence of a discrete interface between adhesive and filmic backing as in conventional PSAs. This enhances the visual appearance of the inventive PSAs over conventional PSAs, since the risk of interface defects as resulting from poor flow, entrainment of air or poor wettability are eliminated.

Secondly, the tackifier layer (C) can be coated at very low temperatures, typically up to 100°C lower than a traditional hot melt pressure sensitive adhesive, since it no longer contains the adhesive base polymer. This improves the filmic label manufacturing process in at least one of the following ways:
a. heat sensitive outer filmic layers, e.g. polyethylene, are not affected;
b. lower operating costs due to the lower coating temperature; and
c. the PSA laminate has improved heat aging properties, less color loss, no charring, etc. compared with a traditional hot melt pressure sensitive adhesive that require higher temperatures.

Another advantage is the molecular weight gradient of tackifier in the adhesive base layer (B) and the tackifier layer (C). Athough not intending to be bound by theory, it is believed due to the mechanism of auto adhesion fusion and intramolecular migration, the adhesive base layer (B) and the tackifier layer (C) can exhibit a molecular weight gradient of tackifier from the tackifier layer (C) to the adhesive base layer (B). This molecular weight gradient leaves a low molecular weight, high tack layer at the surface of the tackifier layer (C) where this functionality is required to create pressure sensitive bonds. The migration of the tackifier into the adhesive base layer (B), the high molecular weight portion of the PSA laminate, can improve at least one of the following properties: peel adhesion, loop tack, shear resistance, creep resistance, and high temperature performance.

Another advantage of the present invention is the adhesive base layer (B) can be manufactured with high cohesive strength polymers. High cohesive strength polymers are polymers having a melt flow rate < 1 g /10 min at 190 °C using a 2.16 kg weight utilizing ASTM D1238. Using such high cohesive strength polymers to manufacture conventional hot melt pressure sensitive adhesives can result in very high hot melt viscosities, so high that they cannot be coated using known hot melt coating equipment.

Another advantage of this invention is that the PSA laminate has improved clarity and haze since the low viscosity of the tackifier composition provides excellent wettability of the non-adhesive laminate and provides a smooth coated surface. A common problem in conventional PSAs is inadequate wetting of the adhesive to the facestock or insufficient flow, resulting in contact or surface defects, reducing the visual appearance of the PSA laminate.

Yet another advantage of this invention is that PSA laminates can now be assembled from readily available non-adhesive laminates which consist of the filmic outer layer (A) and the adhesive base layer (B) that can be converted into the PSA laminate by applying a tackifier layer (C) by normal coating techniques known to a person skilled in the art of coating adhesives (such as slot-die coating, curtain coating, spray coating, solution coating, or dispersion coating).

### Brief Description of the Drawings

Figure 1 is a cross-section of a pressure sensitive adhesive laminate in one embodiment of the invention having an outer filmic layer (A), adhesive base layer (B), and tackifier layer (C).
Figure 2 is a cross-section of a pressure sensitive adhesive laminate in another embodiment of the invention having an outer filmic layer (A), adhesive base layer (B), tackifier layer (C), and release layer (D).
Figure 3 is a cross-section of a pressure sensitive adhesive laminate in another embodiment of the invention having an outer filmic layer (A), adhesive base layer (B), tackifier layer (C), and overlaminate layer (E).
Figure 4 is a cross-section of a pressure sensitive adhesive laminate in another embodiment of the invention having an outer filmic layer (A), adhesive base layer (B), tackifier layer (C), and barrier layer (F).
Figure 5 is a cross-section of a pressure sensitive adhesive laminate in another embodiment of the invention having an outer filmic layer (A), adhesive base layer (B), tackifier layer (C), overlaminate layer (E), and barrier layer (F).
Figure 6 is a cross-section of a pressure sensitive adhesive laminate in another embodiment of the invention having an outer filmic layer (A), adhesive base layer (B), tackifier layer (C), release layer (D), and overlaminate layer (E).
Figure 7 is a cross-section of a pressure sensitive adhesive laminate in another embodiment of the invention having an outer filmic layer (A), adhesive base layer (B), tackifier layer (C), release layer (D), and barrier layer (F).
Figure 8 is a cross-section of a pressure sensitive adhesive laminate in another embodiment of the invention having an outer filmic layer (A), adhesive base layer (B), tackifier layer (C), release layer (D), overlaminate layer (E), and barrier layer (F).
Figure 9 is a schematic overview of one embodiment of a process for preparing the PSA laminate according to the present invention.
Figure 10 is a cross-section of a PSA laminate in another embodiment of the invention having a tackifier layer (C), an adhesive base layer (B), and an outer filmic layer (A) with a curved interface between (B) and (C).
Figure 11 is a cross-section of a PSA laminate in another embodiment of the invention having a tackifier layer (C), an adhesive base layer (B), and an outer filmic layer (A) with a jagged interface between (B) and (C).
Figure 12 is a cross-section of a PSA laminate in another embodiment of the invention having a tackifier layer (C), an adhesive base layer (B), and an outer filmic layer (A) with a discontinuous tackifier layer (C).
Figure 13 is a cross-section of a PSA laminate in another embodiment of the invention having a tackifier layer (C), an adhesive base layer (B), and an outer filmic layer (A) with a discontinuous tackifier layer (C).

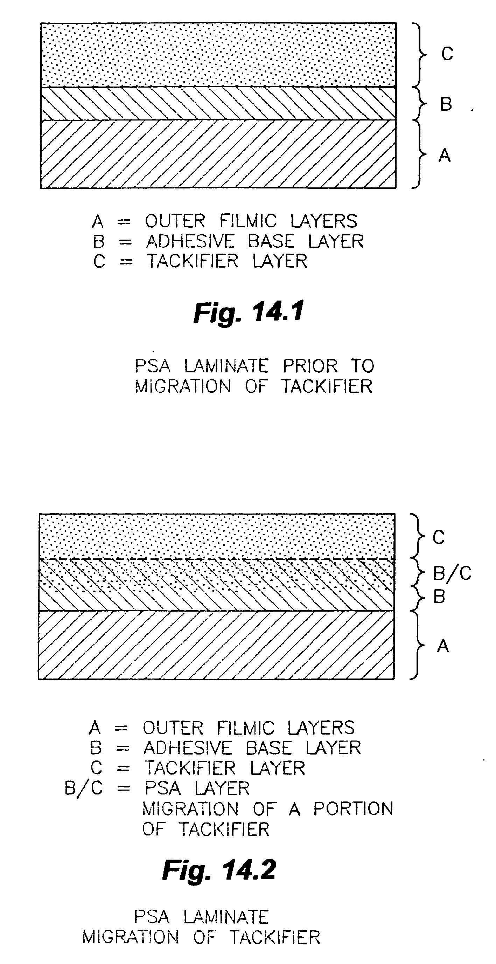

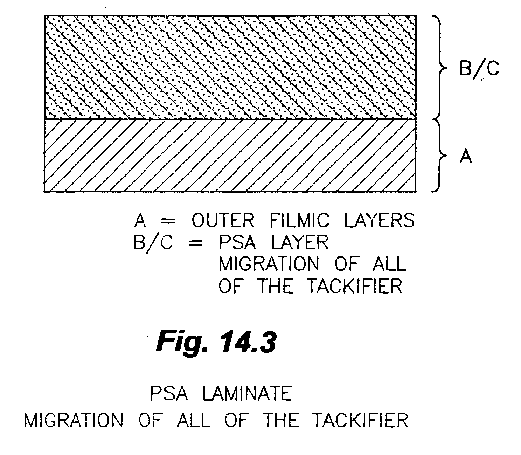

Figures 14.1-14.3 shows a simplistic illustration of the migration of the tackifier from tackifier layer (C) into the adhesive base layer (B) in one embodiment of the invention. Figure 14.1 shows a cross-section of a PSA laminate in one embodiment of the invention having an outer filmic layer (A), an adhesive base layer (B), and a tackifier layer (C) prior to migration. Figure 14.2 shows the migration of a portion of the tackifier in the tackifier layer (C) migrating into the adhesive base layer of the PSA laminate shown in Figure 14.1. Figure 14.3 shows the migration of all of the tackifier in the tackifier layer (C) into the adhesive base layer of the PSA laminate shown in Figure 14.1.
Figures 15 and 16 show spectra of Confocal Raman Spectroscopy of PSA laminate after 3 days (Fig. 15) and 8 days (Fig. 16) of aging.

### Detailed Description of the Invention

Before the present compositions of matter and methods are disclosed and described, it is to be understood that this invention is not limited to specific methods or to particular formulations, except as indicated, and as such, may vary from the disclosure. It is also to be understood that the terminology used is for the purpose of describing particular embodiments only, and is not intended to limit the scope of the invention.

The singular forms "a," "an," and "the" include plural referents, unless the context clearly dictates otherwise.

Optional or optionally means that the subsequently described event or circumstances may or may not occur. The description includes instances where the event or circumstance occurs, and instances where it does not occur.

Ranges may be expressed herein as from about one particular value, and/or to about another particular value. When such a range is expressed, it is to be understood that another embodiment is from the one particular value and/or to the other particular value, along with all combinations within said range.

Throughout this application, where patents or publications are referenced, the disclosures of these references in their entireties are intended to be incorporated by reference into this application, in order to more fully describe the state of the art to which the invention pertains to the extent they do not contradict the statements made herein.

The term "PSA" as used in this disclosure refers to an adhesive that will form a bond to two surfaces under light finger pressure at room temperature: The PSA provides enough potential deformability and wettability so that the necessary contact to a surface can be achieved, yet there is enough internal strength, or cohesion, within the adhesive for it to be able to resist any moderate separation forces. More information concerning the definition of a PSA can be found in Pressure Sensitive Adhesive Tapes, A Guide to Their Function, Design, Manufacture, and Use, John Johnston, Pressure Sensitive Tape Council, 2000, Chap. 2, p. 23.

The term "layer" when referring to the PSA laminate means a layer of material contained in the PSA that is of consistent thickness or can vary in thickness and can be either continuous or discontinuous depending on the use to be made of the PSA laminate. In addition, the composition and thickness of the PSA laminate can vary over time due to the migration of the tackifier in the the tackifier layer (C) into the adhesive base layer (B).

The terms "migrate", "migrating", "migration" , "diffuse", "diffusing", and "diffusion" are used interchangeably and mean that a portion or all of the tackifier in the tackifier layer (C) moves into the adhesive base layer thereby producing a PSA laminate. As a result, the original adhesive base layer may swell, so that the thickness of the combined layers remains relatively unaffected.

In an embodiment of this invention, a pressure sensitive adhesive (PSA) laminate is provided comprising: a) at least one outer filmic layer (A) comprising at least one filmic polymer; b) at least one adhesive base layer (B) comprising at least one adhesive base polymer; and c) at least one tackifier layer (C) comprising at least one tackifier and at least one polymer; wherein the pressure sensitive adhesive laminate is obtainable by co-extruding the outer filmic layer (A) with the adhesive base layer (B) to produce a non-adhesive laminate and applying the tackifier layer (C) to the adhesive base layer side of the non-adhesive laminate to produce the PSA laminate.

The outer filmic layer comprises at least one filmic polymer. In one embodiment of the invention, the outer filmic layer can contain a blend of filmic polymers or can be a multi-layer film of various filmic polymers. Filmic polymers include any filmic polymer that can be coextruded with the adhesive base polymer to produce the non-adhesive laminate. In one embodiment of the invention, it may be desired that the filmic polymer has a solubility parameter that is inconsistent with or incompatible with that of the adhesive base polymer to prevent migration between the two layers.

In another embodiment of the invention, the filmic polymer can, when combined with the adhesive base polymer, provide a sufficiently self-supporting construction to facilitate label separation and application. Alternatively, when the filmic polymer combined with the adhesive base polymer is not sufficiently self-supporting, an overlaminate layer can be applied to the exposed face of the outer filmic layer to provide additional stiffness. Preferably, the filmic polymer and any other material utilized in the outer filmic layer are chosen to provide the non-adhesive laminate with the desired properties such as *inter alia* printability.

Typical filmic polymers include, but are not limited to, polystyrenes, polyolefins, polyamides, polyesters (e.g. polyethylene terephthalate), polycarbonates, polyurethanes, polyacrylates, polyvinyl alcohols, functional polyesters (e.g. sulfopolyesters), poly(ethylene vinyl alcohols), polyether block polyamides, polyvinyl acetates, and mixtures thereof. Preferably, the filmic polymer is a polyolefin including, but not limited to, polymers having repeating units selected from the group consisting of ethylene, propylene, and 1-butene. Most preferably, the filmic polymer is at least one selected from the group consisting of polyethylene, polypropylene and ethylene-propylene copolymer. Various polyethylenes can be utilized including low, medium, and high density polyethylenes.

In one embodiment of the invention, the melt flow rate (MFR) of polyethylene used in the outer filmic layer can range from about 0.1 grams/10 minutes to about 15 grams/10 minutes measured at 190°C using a 2.16 kg weight utilizing ASTM D1238, preferably from 0.1 grams/10 minutes to 5 grams/10 minutes. A commercial example of a polyethylene useful as the outer filmic layer is low density polyethylene sold as Lupolen 2426F having a density of about 0.924 g/cm³ using ISO 1183 test method and a melt flow rate of about 0.75 g/10 minutes following test method ISO 1133 obtained from Basell Polyolefins located in The Netherlands.

In another embodiment of the invention, the melt flow rate (MFR) of polypropylene used in the outer filmic layer can range from about 1 grams/10 minutes to about 20 grams/10 minutes measured at 230°C using a 2.16 kg weight utilizing ASTM D1238, preferably from 0.1 grams/10 minutes to 10 grams/10 minutes. A commercial example of a polypropylene useful as the outer filmic layer is polypropylene homopolymer sold as Moplen HP422H having a density of 0.900 g/cm³ using ISO 1183 test method and a melt flow rate of about 2 g/10 minutes at 230°C using a 2.16 kg weight following test method ISO 1133 obtained from Basell Polyolefins located in The Netherlands. A commercial example of a random polypropylene copolymer useful as the outer filmic layer is Moplen RP210M polypropylene having a density of 0.900 g/cm³ using ISO 1183 test method and a melt flow rate of about 6 g/10 minutes at 230°C using a 2.16 kg weight following test method ISO 1133 obtained from Basell Polyolefins located in The Netherlands.

The inner surface of the outer filmic layer may be coextruded with a barrier layer other than the barrier created by the adhesive base polymer layer (B) and/or the tackifier layer (C) of this invention. The barrier layer may prevent migration of constituents to the outer filmic layer. There may also be included, or alternatively provided, a tie or primer layer to enhance adhesion of the adhesive base polymer layer to the outer filmic layer. Moreover, "linerless" constructions are contemplated to be within the scope of the present claims. In linerless constructions, the outer surface is coated with a release material, such as a silicone (e.g., polydimethylsiloxane).

Generally, the outer filmic layer has a thickness that is suitable for the particular PSA laminate application. In one embodiment of the invention, the outer filmic layer has a thickness of about 10 µm to about 200 µm, preferably from about 20 µm to about 100 µm, and most preferably, from 30 µm to 90 µm.

The adhesive base layer comprises at least one adhesive base polymer. The adhesive base polymer can be any that is known in the art that can be coextruded with the outer filmic polymer and is suitable for producing a non-adhesive laminate or PSA laminate. Generally, the adhesive base polymer utilized to produce the non-adhesive laminate or PSA laminate may generally be classified into the following categories:
random copolymer adhesive base materials, such as, but not limited to, those copolymers based upon acrylate and/or methacrylate copolymers and their derivatives, α-olefin copolymers, silicone-copolymers, chloroprene/acrylonitrile copolymers, and the like;
block copolymer adhesive base polymers, such as, but are not limited to, those based upon linear block copolymers (e.g., A-□ and A-B-A type), multi-block copolymers, branched block copolymers, star block copolymers, grafted, or radial block copolymers, and the like; and
natural and synthetic rubber adhesive base polymers, such as, but are not limited to, polyisobutylene, polyisoprene, butyl rubber, and the like.

In another embodiment of the invention, the adhesive base polymer comprises a thermoplastic elastomer (TPE). Thermoplastic elastomers are polymers that behave like a rubber at their use temperature, but can be processed in the melt as conventional polymers. TPEs include, but are not limited to, linear, branched, graft or radial block copolymers.

Block copolymers can be represented by a di-block structure A-B, a tri-block A-B-A structure, a tetra-block structure, a multi-block structure, a radial or coupled structure (A-B)n, and combinations of these structure; wherein A represents a hard thermoplastic phase or block which is non-rubbery or glassy or crystalline at room temperature but fluid at high temperatures, and B represents a soft-block which is rubbery or elastomeric at service or room temperatures. These thermoplastic elastomers may comprise from about 75% to about 95% by weight of rubbery segments and from about 5% to about 25% by weight of non-rubbery segments.

The non-rubbery segments or hard blocks comprise polymers of mono- and poly-cyclic aromatic hydrocarbons, and more particularly vinyl-substituted aromatic hydrocarbons which may be mono-cyclic or bicyclic in nature. The preferred rubbery blocks or segments comprise polymer blocks of homopolymers or copolymers of aliphatic conjugated dienes. Rubbery materials, such as, but not limited to, polyisoprene, polybutadiene, and styrene butadiene rubbers may be used to form the rubbery block or segment. Particularly preferred rubbery segments include polydienes, and rubbers of ethylene-butylene or ethylene-propylene copolymers.
The latter rubbers may be obtained from the corresponding unsaturated polyalkylene moieties such as polybutadiene and polyisoprene by hydrogenation thereof.

In one embodiment of the invention, the block copolymer may be selected from the group consisting of butadiene-based polymers, isoprene-based polymers, polyether block polyamides, and mixtures thereof. Thus, the butadiene-based polymers may be selected from the group consisting of styrene-butadiene-styrene (SBS) block copolymers, styrene-butadiene (SB) block copolymers, multi-armed (SB)ₓ block copolymers, polybutadiene block copolymers, and mixtures thereof. Isoprene-based copolymers may be selected from the group consisting of styrene-isoprene-styrene (SIS) block copolymers, styrene-isoprene-butadiene-styrene (SIBS) copolymers, styrene-isoprene (SI) block copolymers, linear and multi-armed (SI)ₓ block copolymers, radial block copolymers having an styrene-ethylene-butadiene-styrene (SEBS) backbone and isoprene and/or styrene-isoprene (SI) arms, polyisobutylene, natural rubber, synthetic polyisoprene, and mixtures thereof.

Specific examples of di-block copolymers include, but are not limited to, styrene-butadiene (SB), styrene-isoprene (SI), and the hydrogenated derivatives thereof. Examples of tri-block polymers, tetra-block polymers, and multi-block polymers include, but are not limited to, styrene-butadiene-styrene (SBS), styrene-isoprene-styrene (SIS), α-methylstyrene-butadiene-α-methylstyrene, α-methylstyrene-isoprene-α-methylstyrene, styrene-isoprene-butadiene-styrene (SIBS) and derivatives thereof. Upon hydrogenation of SBS copolymers comprising a rubbery segment of a mixture of 1,4- and 1,2-isomers, a styrene-ethylene-butylene-styrene (SEBS) block copolymer is obtained. Similarly, hydrogenation of an SIS polymer yields a styrene-ethylene/propylene-styrene (SEPS) block copolymer and hydrogenation of a (SI)ₓ multiblock copolymer provides a multiblock copolymer of styrene and ethylene/propylene (SEP)ₓ.

It is contemplated that functionalized block copolymers can be used, such as succinic anhydride-modified SEBS, which is commercially available as Kraton FG-1901X and 1924X block copolymer from Kraton Polymers in Houston, TX.

It should be noted that any of the adhesive base polymers include the hydrogenated derivatives thereof. A number of selectively hydrogenated block copolymers are available commercially from Kraton Polymers under the general trade designation "Kraton G". Thus, particularly suitable block copolymers for the purposes of the present invention include Kraton G 1657 and Kraton G 1730 block copolymers. Kraton G 1657 is a SEBS tri-block copolymer which contains about 13% by weight styrene. Kraton G 1730 is a (SEP)ₓ multi-block copolymer which contains about 21 % by weight styrene.

Moreover, the adhesive base polymer layer (B) can be made up of high cohesive strength polymers. Since such polymers require relatively high temperatures to process in traditional hot melt manufacturing equipment, they are typically not used in producing a PSA laminate from the melt since at high temperatures, the tackifiers do not withstand such temperatures over an extended period of time. Such high cohesive strength polymers may also be applied with the tackifier in the tackifier layer (C) as either a solution or dispersion. Examples of high cohesive strength polymers include, but are not limited to, styrene block copolymers and isobutylene copolymers. Styrene block copolymers include, but are not limited to, styrene-isoprene-styrene block copolymers and copolymers based on styrene and ethylene/butylene (S-E/B-S), and copolymers based on styrene and ethylene/propylene (S-E/P-S). In one embodiment of the invention, the polystyrene content of the SIS block copolymer ranges from about 10% by weight to about 50% by weight, preferably from 15% by weight to 30% by weight. In another embodiment of the invention, the solution viscosity of the styrene block copolymers ranges from about 0.05 Pa.s to about 20 Pa.s, preferably from 0.1 Pa.s to 5 Pa.s measured utilizing 25% solids in toluene in a Brookfield viscosimeter, such as a Brookfield viscosimeter type DV-I+, using an appropriate spindle and rotation speed.

In another embodiment of the invention, the molecular weight of the polyisobutylene ranges from about 250,000 to about 5,000,000, preferably from 750,000 to 3,500,000. High cohesive strength polymers are commercially available as Kraton D1111 styrene-isoprene-styrene polymers from Kraton Polymers in Houston, TX, Oppanol B200 isobutylene copolymers available from BASF, Ludwigshafen, Germany, and Kraton G-1652E S-E/B-S copolymer from Kraton Polymers.

Further examples of useful adhesive base polymers can be found in WO 00/13888, WO 00/17285, and WO 01/96488, incorporated by reference herein in their entirety to the extent they do not contradict the statements herein.

Generally, the adhesive base layer has a thickness that is suitable for the particular PSA laminate application. In one embodiment of the invention, the adhesive base layer has a thickness of about 1 µm to about 60 µm, preferably from about 2 µm to about 40 µm, and most preferably, from 4 µm to 20 µm.

The adhesive base layer can be modified by the addition of additives. Any additive known in the art that is compatible with the adhesive base polymer can be utilized. In one embodiment of the invention, the adhesive base layer can be modified with pure monomer resins; poly(ethylene) or poly(propylene) waxes; poly(ethylene) with low viscosity, such as polyethylene with a melt flow rate of about 5g/10min to about 80 g/10min, preferably 10 to 50 g/10min, 190°C, 2.16 kg weight, according to ASTM D-1238; and ethylene or propylene based (co)polymers as produced by metallocene catalysts. These additives can be utilized to improve the unwind characteristics of the non-adhesive laminate formed by the outer filmic layer and the adhesive base layer and /or to facilitate the production of the non-adhesive laminate formed by the outer filmic layer and the adhesive base layer by matching the rheological properties of the filmic polymer and the adhesive base polymer.

The tackifier layer (C) comprises at least one tackifier. In one embodiment, the tackifier layer (C) comprises at least one tackifer and at least one polymer. In another embodiment, the tackifier layer (C) comprises at least one tackifier, at least one polymer, and at least one plasticizer.

The polymer can be any polymer known in the art suitable for producing PSA laminates. Preferably, the polymer is at least one thermoplastic elastomer. Thermoplastic elastomers were previously discussed in this disclosure. In one embodiment of the invention, the amount of polymer is that which does not cause the tackifier layer to be a PSA. The amount of polymer can range from 0.1 % by weight to about 15% by weight. Other ranges can be selected from the following ranges which are given in weight percent based on the weight of the tackifier layer (C): 0 to 7, 0 to 9, 0.1 to 15, 1 to 15, 5 to 15, 10 to 15, 0.1 to 10, 1 to 10, 5 to 10, 7 to 10, 0.1 to 5, 1 to 5, and 2 to 5.

The tackifier can be any that is known in the art suitable for use in PSA laminates. The tackifer can include, but is not limited to, amorphous tackifier resins of all types known to tackify adhesives, including rosin-based and hydrogenated rosin-based, hydrocarbon-based and hydrogenated hydrocarbon-based, phenolic-based, terpene-based, terpene phenolic-based, styrenated terpene-based, hydrogenated terpene-based, polyester-based, pure monomer aromatic-based, aromatic acrylic-based, liquid resin types, and functionalized types thereof. Note that any of these tackifiers may be in a hydrogenated form. Pure monomer aromatic-based tackifier are tackifying resins based on low molecular weight polymers or oligomers produced from monomers, such as, for example, styrene, alphamethylstyrene, vinyl toluene, and mixtures thereof.

In one embodiment of the invention, the tackifier layer comprises a liquid tackifier composition. The liquid tackifier composition may be a solution or dispersion of an appropriate tackifier. Such tackifier may be selected on the basis of experiments or existing knowledge with regard to the composition of the pressure sensitive adhesive laminate based on the adhesive base polymer being the major component of the non-adhesive laminate.

In another embodiment of this invention, the tackifier layer (C) may be a blend of polymer (i.e. adhesive base polymer and/or other performance additives) and amorphous resin tackifier resulting in a tackifier masterbatch composition. This composition can be formulated for spray ability/high-tack/adhesion and good compatibility with the adhesive base polymer layer.

Optionally, the tackifier layer can further comprise at least one plasticizer. The plasticizer can be any that is known in the art suitable for use in a PSA laminate. Examples of plasticizers include, but are not limited to, naphthenic and paraffinic oils, citrates, sulfonates, and phthalates

Tackifiers may vary in their compatibility with the adhesive base polymer. In one embodiment of the invention, the tackifier may be preferentially soluble in the adhesive base polymer. This is especially suitable for elastomers containing polystyrene or polyisoprene blocks. Tackifiers that are preferentially soluble in polystyrene and polyisoprene are obtained by polymerization of a stream of aliphatic petroleum derivatives in the form of dienes and mono-olefins containing 5 or 6 carbon atoms, generally in accordance with the teachings of US 3,577,398, herein incorporated by reference in its entirety to the extent it does not contradict statements herein. The resulting hydrocarbon resins range from materials that are normally liquid at room temperatures to materials that are normally solid at room temperature, and typically contain 40% or more by weight polymerized dienes. Such dienes may be, for example, piperylene and/or isoprene. Examples include, but are not limited to, the Piccotac® family of resins (available from Eastman Chemical Company, Kingsport, TN, USA) and the Wingtack® family of resins (available from the Chemical Division of Goodyear Tire and Rubber Company, Akron, Ohio). Other solid tackifiers include, but are not limited to, Escorez® 1304 and Escorez® 1310-LC manufactured by Exxon Chemical Company (Houston, Texas). Further examples include, but are not limited to, modified C₅-type petroleum resins which are made by copolymerizing one or more C₅ monoolefins and/or diolefins with one or more C₈ or C₉ monoalkenyl aromatic hydrocarbons. These modified C₅-type petroleum resins can be hydrogenated. Examples include, but are not limited to, C₅ monoolefins and diolefins such as isoprene, 2-methyl-1-butene, 2-methyl-2-butene, cyclopentene, 1-pentene, cis- and trans-2-pentene, cyclopentadiene, and cis-trans-1,3-pentadiene. Additional examples of C₈ and C₉ monoalkenyl aromatic compounds are styrene, methylstyrene, and indene.

Other compositions that can be used as tackifiers include, but are not limited to, hydrogenated aromatic resins in which a substantial portion (50% or greater), if not all, of the benzene rings are converted to cyclohexane rings (for example the Regalite™ and Regalrez™ family of resins available from Eastman Chemical, such as, Regalite R 1090, R 1100, R 1125, R 7100, R 9100 and Regalrez 1018, 1094, 3102, 6108, and 1126) and hydrogenated polycyclic resins (typically dicyclopentadiene resins, such as Escorez® 5300, 5320, 5340, 5380, 5400 and 5600, manufactured by Exxon Chemical Company). These tackifiers are especially useful when using an isoprene-based adhesive base polymer.

In another embodiment of the invention, one may further add rosins, rosin esters, polyterpenes, aromatic and functionalized resins and other tackifiers to the tackifier layer (C) that are compatible to some degree with the adhesive base polymer contained in the adhesive base layer, especially when utilizing polyisoprene or polybutadiene as the adhesive base polymer. Other additives include, but are not limited to, plasticizer oils, such as Shell Flex 371 (from Shell Chemical Company).

In one embodiment, the tackifier layer (C) contains at least one tackifier in an amount of about 50% to about 90% by weight, preferably 70% to 90% by weight, either as a solution or a dispersion. In another embodiment, the tackifier layer (C) comprises a blend of the thermoplastic elastomer, which is present in the non-adhesive laminate, and an amorphous resin tackifier. Preferably, the tackifier layer (C) includes about 2% to about 15% by weight of a thermoplastic elastomer, which may be the same elastomer as present in the adhesive base layer (B) or an elastomer compatible therewith.

Generally, the tackifier layer has a thickness that is suitable for a particular PSA laminate application. In one embodiment of the invention, the tackifier layer has a thickness of about 2 µm to about 150 µm. Other ranges are from about 4 to about 125 µm and from 5 µm to 50 µm.

The tackifier layer can be applied to the non-adhesive laminate by any method known in the art. Examples of application methods utilizing heat include, but are not limited to, slot die coating, roll axis coating, curtain coating, knife-over-roll coating, and spray coating. The tackifier layer can also be applied as an emulsion, dispersion or solution of the tackifier composition by any suitable method.

Depending on the use of the PSA laminate, the tackifier layer (C) itself may or may not form an effective PSA layer for the purposes of a PSA laminate (e.g.label, etc.). The term "PSA" was previously defined in this disclosure. In other words, if a tackifier layer (C) does not form an effective PSA layer when it is applied to a solid substrate neither the adhesive nor the structural properties (tack and strength) would be sufficient to form a structure (including an adhesive bond) with the properties of a conventional pressure sensitive adhesive laminate.

The outer filmic layer, adhesive base layer, and tackifier layer of the PSA laminate can contain inorganic fillers and other organic and inorganic additives to provide desired properties, such as, but not limited to, appearance properties (opaque or coloured films), durability, and processing characteristics. Examples of useful fillers include, but are not limited to, calcium carbonate, titanium dioxide, metal articles, and fibers. Additives can include, but are not limited to, flame retardants, antioxidant compounds, heat stabilizers, light stabilizers, ultra-violet light stabilizers, anti-blocking agents, processing aids, and acid acceptors, etc. Nucleating agents can be added to increase crystallinity and thereby increase stiffness.

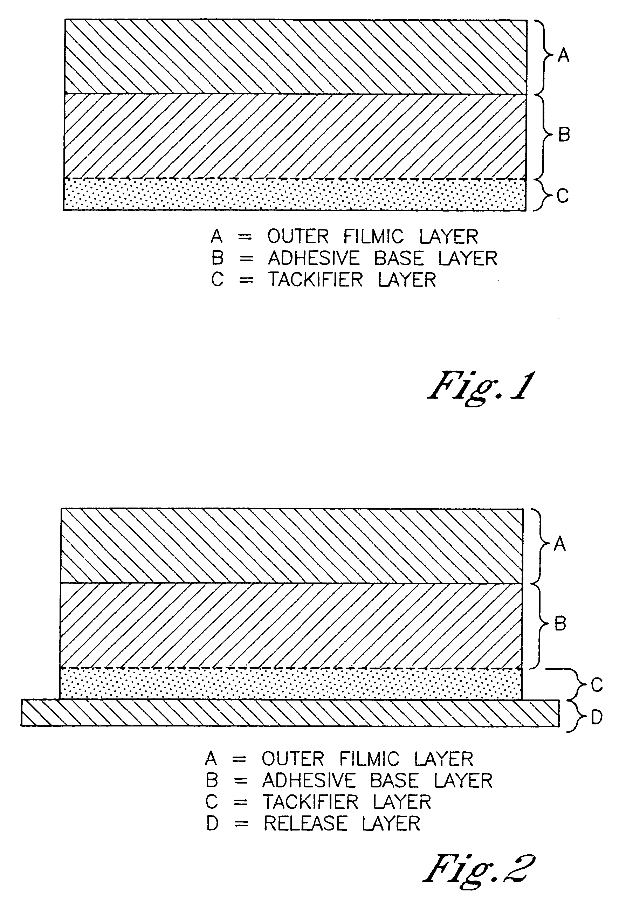

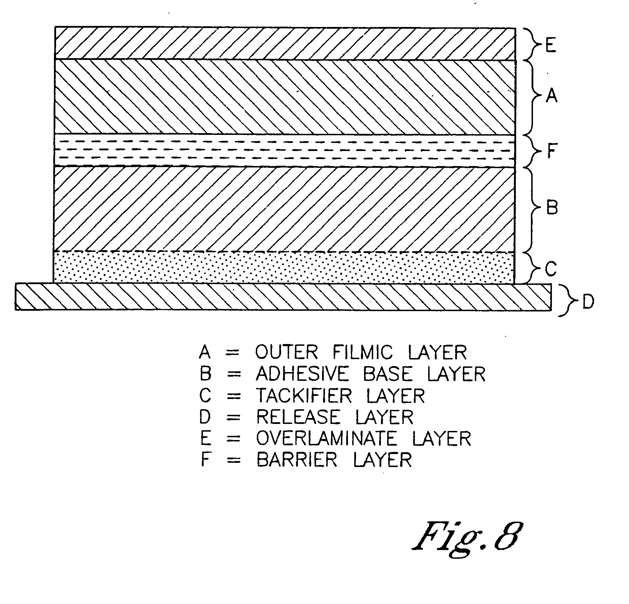

Particular embodiments of the PSA laminate are shown in Figures 1-8 and 10-14. The PSA laminates in Figures 1-8 and 10-14 illustrate embodiments of the invention where the tackifier in the tackifier layer (C) has not yet migrated into the adhesive base layer (B). The coextruded melt bond (10) between the outer filmic layer and the adhesive base layer is shown in each figure.

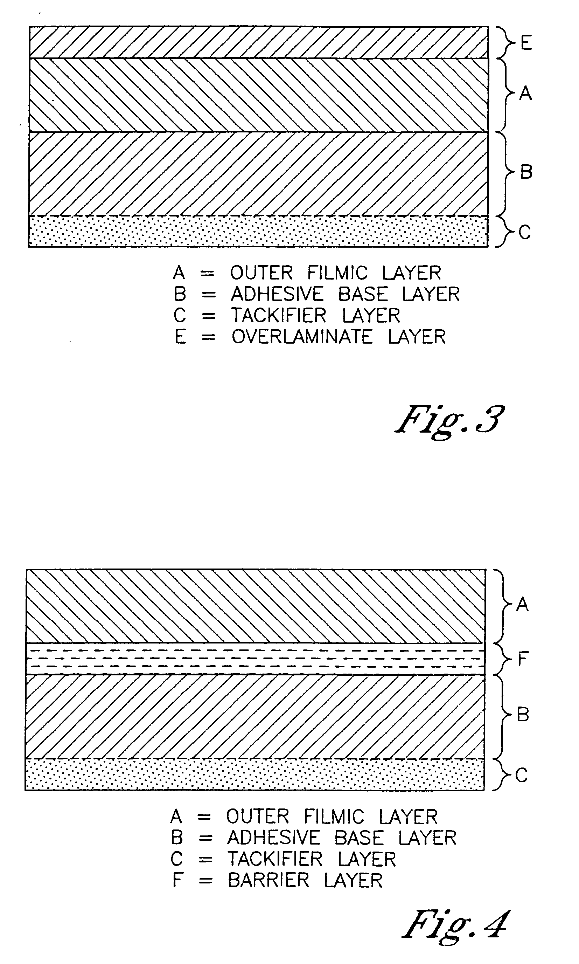

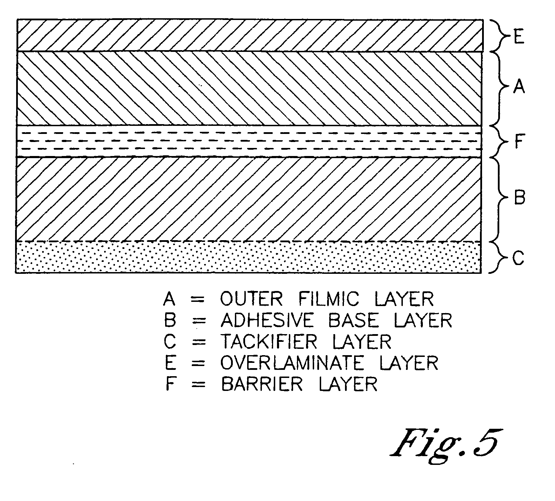

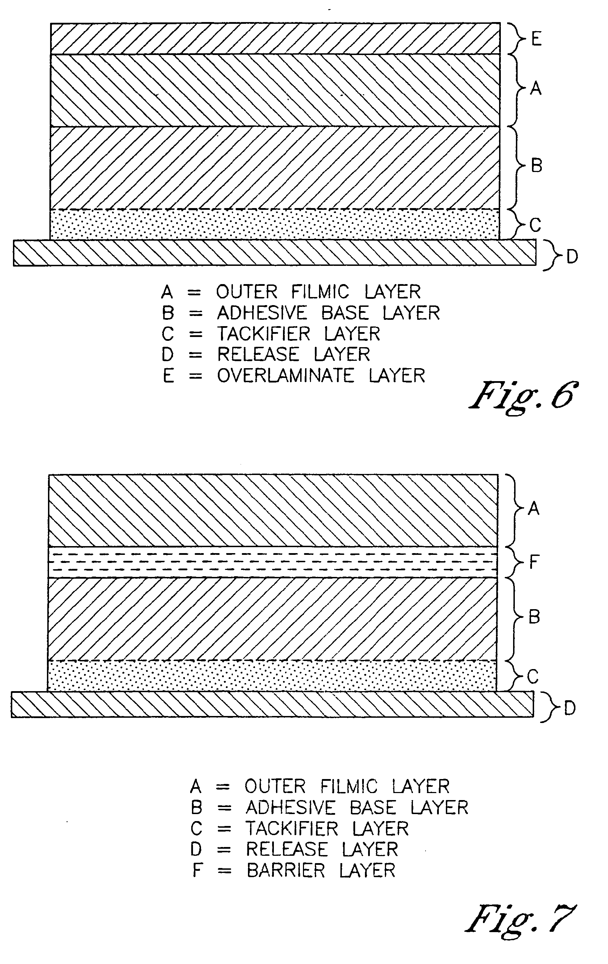

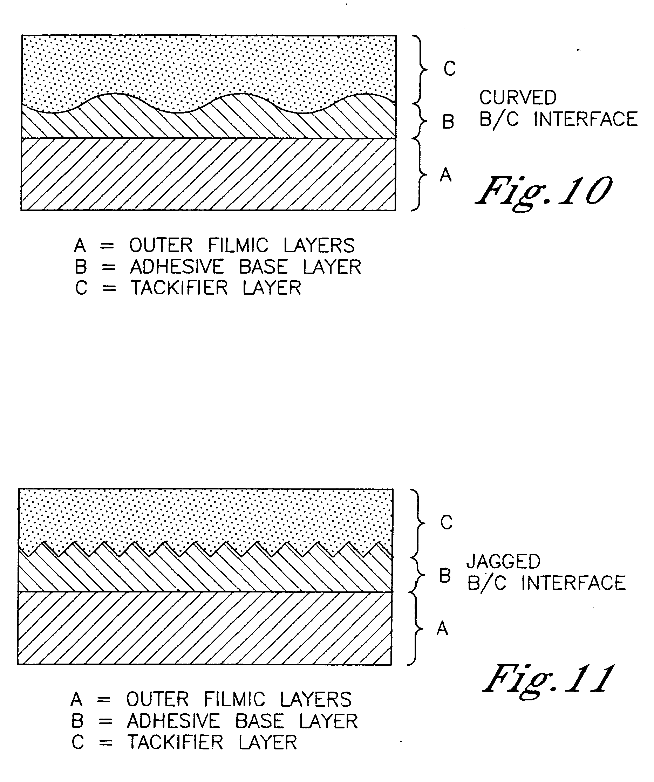

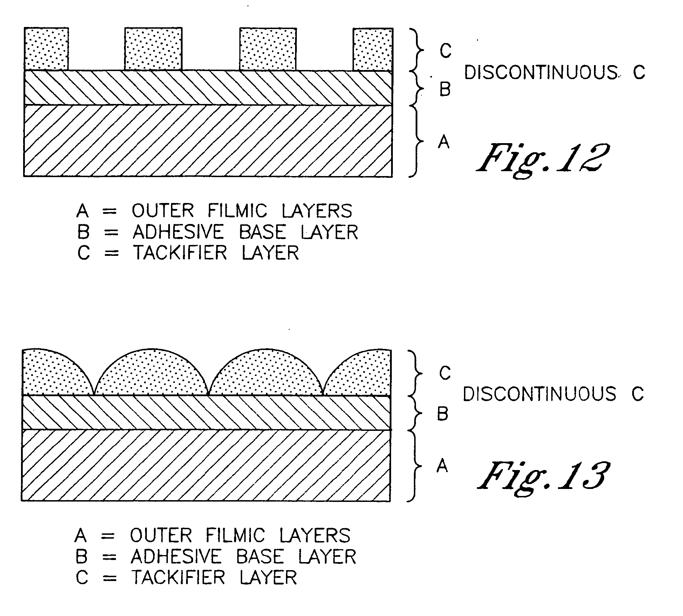

In Figure 1, a cross-section of a PSA laminate is shown comprising an outer filmic layer (A), an adhesive base layer (B), and a tackifier layer (C). In Figure 2, a cross-section of a PSA laminate further comprising a release layer (D) is shown. In Figure 3, a cross-section of a PSA laminate comprising an outer filmic layer (A), an adhesive base layer (B), a tackifier layer (C), and an overlaminate layer (E) is shown. In Figure 4, a cross-section of a PSA laminate of Figure 1 is shown further comprising a barrier layer (F) between the outer filmic layer (A) and the adhesive base layer (B). In Figure 5, a cross-section of a PSA laminate is shown comprising an outer filmic layer (A), an adhesive base layer (B), a tackifier layer (C), an overlaminate layer (E), and a barrier layer (F). Figures 6-8 show the PSA laminates of Figures 3-5 further comprising a release layer (D). Layers A-F have been previously described in this disclosure. In Figure 10, a cross-section of a PSA laminate is shown having a tackifier layer (C), an adhesive base layer (B), and an outer filmic layer (A) wherein there is a curved interface between (B) and (C). In Figure 11, a cross-section of a PSA laminate is shown having a tackifier layer (C), an adhesive base layer (B), and an outer filmic layer (A) wherein there is a jagged interface between (B) and (C). In Figure 12, a cross-section of a PSA laminate is shown having a tackifier layer (C), an adhesive base layer (B), and an outer filmic layer (A) wherein there is a discontinuous tackifier layer (C). In Figure 13, a cross-section of a PSA laminate is shown having a tackifier layer (C), an adhesive base layer (B), and an outer filmic layer (A) wherein there is a discontinuous tackifier layer (C).

Although not intended to be bound by theory, Figures 14.1-14.3 shows a simplistic illustration of the migration of the tackifier from tackifier layer (C) into the adhesive base layer (B) in one embodiment of the invention. Figure 14.1 shows a cross-section of a PSA laminate in one embodiment of the invention having an outer filmic layer (A), an adhesive base layer (B), and a tackifier layer (C) prior to migration. Figure 14.2 shows the migration of a portion of the tackifier in the tackifier layer (C) migrating into the adhesive base layer of the PSA laminate shown in Figure 14.1 to produce a PSA layer (B/C). Figure 14.3 shows the migration of all of the tackifier in the tackifier layer (C) into the adhesive base layer of the PSA laminate shown in Figure 14.1 to produce a PSA layer (B/C).

Typically, the PSA laminate can have a thickness of about 35 to about 400 µm, preferably about 100 µm to about 250 µm, and most preferably from 50 µm to 150 µm. Generally, the PSA laminate can have a thickness ratio of outer filmic layer (A) to adhesive base layer (B) from about 50:1 to about 1:1, preferably 25:1 to 2:1. Thus, the thickness of outer filmic layer (A) may be in the range from about 10 µm to about 200 µm, preferably from about 20 µm to about 100 µm, and most preferably from 30 µm to 90 µm. Adhesive base layer (B) may have a thickness of about 1 to about 60 µm, preferably about 2 to about 40 µm and most preferably, 4 to 20 µm. A particularly suitable PSA laminate may have a thickness of 50-150 µm.

The non-adhesive laminate is formed by a process comprising co-extruding an outer filmic layer (A) comprising at least one filmic polymer and an adhesive base polymer layer (B) comprising at least one adhesive base polymer, which may later on in the process be converted into a pressure sensitive adhesive laminate. The co-extrusion can be conducted by any method known in the art. Examples of processes for co-extruding the outer filmic layer (A) and the adhesive base layer (B) include, but is not limited to, casting and bubble blowing. In one embodiment, the co-extrusion can be conducted by melting the filmic polymer and non-adhesive polymer in separate extruders and delivering the molten streams to an extrusion die from which the outer filmic layer (A) and the adhesive base layer (B) are extruded.

The co-extrusion of the filmic polymer with the adhesive base polymer may be facilitated when the melt viscosities of the two polymers are similar. Thus, the choice of the material to be utilized in the formation of the non-adhesive laminate may depend upon the melt flow rate of the coextruded materials. In one embodiment of the invention when the filmic polymer is polyethylene, the melt flow rate of the filmic polymer can range from about 0.1 g/10 min to about 15 g/10 min, preferably from 0.1 g/10 min to 5 g/10min at 190°C using a 2.16 kg weight (ASTM D1238). In one embodiment of the invention when the filmic polymer is polypropylene, the melt flow rate of the filmic polymer can range from about 1 g/10 min to about 20 g/10 min, preferably from 0.1 g/10 min to 10 g/10min at 230°C using a 2.16 kg weight (ASTM D1238).

The non-adhesive laminate has a thickness that is suitable for the particular application sought. In one embodiment of the invention, the non-adhesive laminate has a thickness of about 10 µm to about 260 µm, preferably from about 20 µm to about 140 µm, and most preferably, from 30 µm to 80 µm. The thickness of the outer filmic layer can range from about 10 µm to about 200 µm, preferably from about 20 µm to about 100 µm, and most preferably, from 30 µm to 90 µm. The thickness of the adhesive base layer can range from about 1 µm to about 60 µm, preferably from about 2 µm to about 40 µm, and most preferably, from 4 µm to 20 µm The ratio of the outer filmic layer to the adhesive base layer can range from 50:1 to 1:1, preferably from 25:1 to 2:1 and most preferably, 15:1 to 4:1.

Optionally, a number of additional steps can be performed on the non-adhesive laminate or PSA laminate. Thus, for example, the non-adhesive laminate or PSA laminate may be uniaxially or biaxially oriented (e.g., by heat stretching and heat setting). In this context, it is appreciated that the application of the tackifier layer (C) may be effected both before and/or after the stretching occurs. Machine direction or biaxial orientation of the non-adhesive laminate or PSA laminate according to the invention can be accomplished by techniques known in the art. For example, the laminates can be oriented in the machine direction by using tentering frames.

It should be noted at this point, however, that the non-adhesive laminate is, in spite of the presence of at least one adhesive base polymer, not a pressure sensitive adhesive laminate. Thus, in most cases, the laminate will not have any problem of tackiness on heated rolls up to temperatures as high as 100°C.

Accordingly, the non-adhesive nature of the non-adhesive laminate has significant advantages. Thus, this non-adhesive laminate can be easily handled and wound onto itself for later use, i.e. conversion into a PSA laminate. Moreover, the adhesive base polymer of the adhesive base layer in the co-extrusion process can establish/form a coextruded melt bond with the outer filmic layer. Thus, any off-setting that can occur with a normally manufactured, transfer coated, hot melt PSA filmic label can be eliminated. Off-setting is the undesirable transfer of adhesive to a substrate during label removal caused by insufficient anchorage of the adhesive layer onto the filmic layer substrate.

In one embodiment of the present invention, a non-adhesive laminate is provided having a thickness of about 11 to about 210 µm comprising:
a. at least one outer filmic layer comprising at least one filmic polymer and having a thickness of about 10 to about 160 µm, preferably 45 to 150 µm, and
b. at least one adhesive base layer having a thickness of about 1 to about 50 µm comprising at least one thermoplastic elastomer (TPE) selected from the group of TPEs which are capable of forming a pressure sensitive laminate.

The non-adhesive laminate may further comprise an anti-blocking layer having a thickness of about 1 to about 5 µm on top of the outer filmic layer (i.e. not in contact with the adhesive base layer (B)). This optional anti-blocking layer may typically be coextruded with the outer filmic layer (A) and the adhesive base layer (B). The purpose of this layer is to provide a smoother release or unwind of a rolled up non-adhesive laminate during the coating of the tackifier layer (C).

In one embodiment of the invention, the thermoplastic elastomer and the thickness of the adhesive base layer typically will be selected on the basis of two criteria: (a) strength requirements of the PSA laminate, and (b) capability of the thermoplastic elastomer to form a traditional PSA composition when about 30% to about 95% by weight of the thermoplastic elastomer and about 5% to about 70% by weight of a tackifier are combined (e.g. hot melt) and applied as a tackifier layer (C) to the non-adhesive laminate. In this context, it should be kept in mind that it is the purpose and function of the adhesive base polymer layer to "receive" the tackifier layer (C). Thus, the adhesive base polymer layer typically comprises no tackifier.

The outer filmic layer (A) is coextruded with the adhesive base polymer layer, and at the interface of these two layers a relatively strong coextruded melt bond is formed. This implies that any bond of the pressure sensitive adhesive laminate made with a substrate during use of an adhesive label will either fail at the adhesive substrate interface or internally, i.e. cohesive failure. The advantage of this is that it allows a suitable formulation to be made to result in cohesive-failing, tamper evident bonds suitable for security, tamper proof labelling, or for adhesion-interface failure mode, removable labels as well as resealable PSA applications.

In another embodiment of this invention, a process for preparing a PSA laminate is provided. The process comprises co-extruding at least one outer filmic layer (A) comprising at least one filmic polymer and at least one adhesive base layer (B) comprising at least one adhesive base polymer to produce the non-adhesive laminate and applying at least one tackifier layer (C) to the adhesive base layer (B) of the non-adhesive laminate to produce the PSA laminate.

In forming the PSA layer (B and C) by applying a tackifier layer (C), a portion of the tackifier can diffuse into the adhesive base layer (B) such that a molecular weight gradient from tackifier layer (C) (low molecular weight) to adhesive base layer (B) (high molecular weight) will form. This leaves a low molecular weight, high-tack layer at the surface of (C) exactly where this functionality is required to create pressure sensitive bonds. Conversely, in the high molecular weight portion of the PSA layer (B & C), enhanced and improved shear resistance, creep resistance and high temperature performance may be observed.

In one embodiment of the invention, the portion of tackifier that diffuses into the adhesive base layer can be selected from the following ranges which are given in weight percent based on the weight of the tackifier layer (C):' 0.1 to 100; 5 to 100; 10 to 100; 15 to 100; 20 to 100; 25 to 100; 30 to 100; 35 to 100; 40 to 100; 50 to 100; 55 to 100; 60 to 100; 65 to 100; 70 to 100; 75 to 100; 80 to 100; 85 to 100; 90 to 100; 95 to 100; 0.1 to 90; 5 to 90; 10 to 90; 15 to 90; 20 to 90; 25 to 90; 30 to 90; 35 to 90; 40 to 90; 45 to 90; 50 to 90; 55 to 90; 60 to 90; 65 to 90; 70 to 90; 75 to 90; 80 to 90; 85 to 90; 0.1 to 80; 5 to 80; 10 to 80; 15 to 80; 20 to 80; 25 to 80; 30 to 80; 35 to 80; 40 to 80; 45 to 80; 50 to 80; 55 to 80; 60 to 80; 65 to 80; 70 to 80; 75 to 80; 0.1 to 70; 5 to 70; 10 to 70; 15 to 70; 20 to 70; 25 to 70; 30 to 70; 35 to 70; 40 to 70; 45 to 70; 50 to 70; 55 to 70; 60 to 70; 65 to 70; 0.1 to 60; 5 to 60; 10 to 60; 15 to 60; 20 to 60; 25 to 60; 30 to 60; 35 to 60; 40 to 60; 45 to 60; 50 to 60; 55 to 60; 0.1 to 50; 5 to 50; 10 to 50; 15 to 50; 20 to 50; 25 to 50; 30 to 50; 35 to 50; 40 to 50; 45 to 50; 0.1 to 40; 5 to 40; 10 to 40; 15 to 40; 20 to 40; 25 to 40; 30 to 100; 35 to 40; 0.1 to 30; 5 to 30; 10 to 30; 15 to 30; 20 to 30; 25 to 30; 0.1 to 20; 5 to 20; 10 to 20, 15 to 20; 0.1 to 10; and 5 to 10.

The PSA laminate can be produced by any method known in the art. In one embodiment of the invention, the PSA laminate can be produced in a one-step extrusion/spray-coating process, and the obtained PSA laminate may be self-wound or laminated to a release liner (e.g. silicone backing paper) and wound, creating PSA tape or label structures, respectively. Such PSA laminate will thus be created cost-effectively. In particular, the tackifier layer (C) can be coated at very low temperatures, typically up to 100°C lower than with traditional hot-melt pressure sensitive adhesives. This may improve the manufacturing process in at least one of the following ways: (1) heat sensitive outer filmic layers, e.g. polyethylene, may be direct coated compared to the usual method of transfer coating; (2) process costs are lower; (3) a tackifier master-batch composition may be expected to have better heat aging properties, less colour loss, less charring in comparison to PSA laminates that have been conventionally processed or coated at high temperatures (with the tackifier in the PSA composition) which can exhibit gelling and/or charring due to an extended heat history.

It can be particularly advantageous to "assemble" the final PSA laminate at a different location from the production facility for the manufacture of the non-adhesive laminate. The non-adhesive laminate can be self-wound and stored for an indefinite time. In a second process step, the non-adhesive laminate (A & B) can then be further processed, for example, on a (narrow web) label press which is suitably modified for spraying or coating of the tackifier layer (C) onto the non-adhesive laminate to form the pressure sensitive adhesive layer (B and C), thereafter laminated with off-line produced release paper or release film (D), where the finished label would then be processed and used as a traditionally manufactured label laminate. To further reduce the costs, it is envisaged that such process could take place in-line with the printing and converting of the label where the finished label would then be applied directly to the article to be labelled. This would obviate the need for a silicone backing support and would further reduce the costs.

The conversion of the non-adhesive laminate can be effected either in one production line (on-line) or off-line at a different location. This conversion typically will be implemented by applying the tackifier layer (C) to the second surface (or under surface) of the non-adhesive laminate (i.e. that is the surface of the non-adhesive laminate that is not in contact with the outer filmic layer (A)).
Tackifier layer (C) may be applied on the adhesive base layer (B) either directly or indirectly. In an indirect (or transfer) coating process, tackifier layer (C) may be first coated on an intermediary carrier (e.g. siliconized paper) and then transferred to adhesive base polymer layer (B).

The conversion of the non-adhesive laminate may require that the laminate is heated. Heating may be effected in the stretching process or separately by means of e.g. infra-red heaters. Such heating can help propagate the diffusion mechanism of the tackifier into the adhesive base layer and converts the non-adhesive laminate into a PSA laminate. Another advantage is that this tackifier layer (C) can be coated onto the non-adhesive laminate at very low temperatures, typically up to 100°C less than the required temperature for traditional hot melt pressure sensitive adhesives. Generally, conventional coating method temperatures range from about 130°C to about 200°C, while the coating temperatures for applying the tackifier layer (C) to the non-adhesive laminate can range from about 60°C to about 120°C or from about 85°C to about 110°C.

In one embodiment of the invention, the tackifier is a liquid or has been liquified (by melting, adding of solvent, forming of dispersion). Suitable solvents include hydrocarbons such as toluene. Dispersions may be formed with water and/or alcohols. Thus, the present invention further suggests tackifier compositions which essentially comprise one of the previously described tackifiers with either a solvent or dispersant and other additives.

In general, a PSA laminate according to the invention can have a thickness of about 35 to about 400 µm, preferably from 100 to 200 µm. However, other laminates are contemplated to be within the scope of the invention. e.g. faceless PSA constructions as described in US 2003198737, herein incorporated by reference to the extent it does not contradict statements herein. Accordingly, in applying the tackifier layer (C), both the layer thickness to be applied to the non-adhesive laminate and the concentration of the tackifier in the layer are of some concern.

The ranges for tackifier concentration in the tackifier layer (C) and the thickness were discussed previously in this disclosure. Thus, one function of the tackifier layer (C) is to provide a reservoir or source for a tackifier to migrate into the adhesive base layer to form the PSA laminate. An additional concern is the choice of solvent/dispersant, which on the one hand, could facilitate the migration of the tackifier into the adhesive base polymer layer, but on the other hand, should not be present in an amount to effectively swell the adhesive base polymer layer.

In one embodiment of the invention, the tackifier layer (C) itself does not form a PSA. The term "PSA" was previously defined in this disclosure. In this embodiment, both the concentration of the tackifier and the viscosity of the tackifier (which can account for the easiness of the application of the tackfier composition to the adhesive base layer) would be insufficient to form an effective pressure sensitive adhesive laminate.

In another embodiment, the tackifier layer (C) forms a PSA. The term "PSA" was previously defined in this disclosure.

The tackifier layer (C) may comprise other additives that serve different purposes. For instance, polystyrene reinforcing additives may be present. Moreover, other components can be added to improve the stability, impart structural reinforcement, improve coatability, or impart some other desirable properties. Accordingly, the tackifier-layer (C) may include stabilizers which inhibit oxidative degradation of the adhesives and pigments.

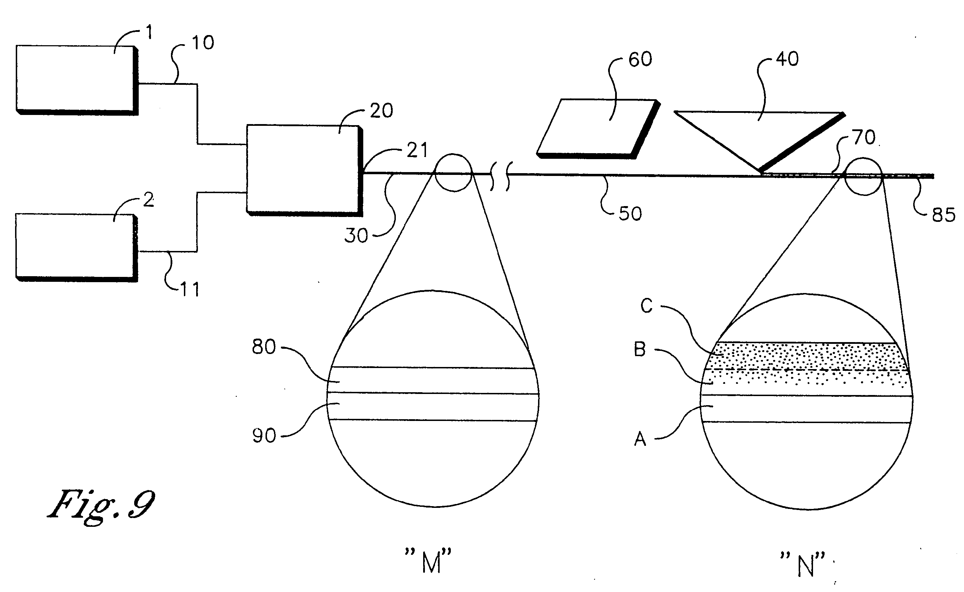

Figure 9 represents a schematic overview of one embodiment of the process for preparing the PSA laminate according to the present invention. In a co-extrusion technique, two extruders 1 and 2 are utilized which provide two molten streams through lines 10 and 11 to the co-extrusion die 20. Extruder 1 provides a molten stream 10 of the adhesive base layer which comprises at least one adhesive base polymer and extruder 2 provides a molten stream 11 of the filmic outer layer comprising at least one filmic polymer: The extruders 1 and 2 are used to melt the polymers and pumps are provided to deliver the molten streams to the extrusion die 20. The precise extruder utilized is not critical to the process. A number of useful extruders are known, and these include, but are not limited to, single and twin-screw extruders, etc. Such extruders are available from a variety of commercial sources including Killion Extruders, Inc., C.W. Brabender, Inc., American Leistritz Extruder Corp., and Davis Standard Corp. A variety of useful co-extrusion die systems are known. Examples of extrusion dies useful in this invention are so-called "vane" dies, and multimanifold dies available from the Cloeren Company of Orange, Texas. Referring again to Figure 9, the molten non-adhesive laminate 30 of at least two layers exits the extrusion die 20 through orifice 21. This non-adhesive laminate (as shown in detail M in Figure 9) comprises the outer filmic layer 90 and the adhesive base layer 80 of the present invention.

It is understood by those skilled in the art of film coextrusion processes that actual production lines may have more than two extruders and may build up the non-adhesive laminate in more layers than are readily identified in the final non-adhesive laminate. In many cases, layers are build up of sublayers of the same or different material to enhance production speed, production flexibility or other reasons.

The non-adhesive laminate can then be further processed by any method known in the art. For instance, a number of additional steps can be performed on the non-adhesive laminate. The non-adhesive laminate of the present invention can either be collected for future processing, overlaminating and converting at a different time and/or geographic location, or these laminates can be routed to one or more other stations for printing, overlaminating, and/or converting during the same operation. In the example shown in Figure 9, the non-adhesive laminate is coated by a coating head 40 forming a tackifier layer 70 of the tackifier composition on the adhesive base layer 80. It-may be occasionally necessary to heat the non-adhesive laminate 50 before or after applying the tackifier layer (C). Thus, the presence of a heater 60 (e.g. infra-red heater) may be desirable. Note that heater 60 can be located after the application of the tackifier layer 70 by coating head 40. Once the tackifier layer 70 has been applied, the non-adhesive laminate will "convert" into the final product, the PSA laminate comprising outer filmic layer (A) and pressure sensitive adhesive layer (B and C) (as shown in detail N in Figure 9) formed from the adhesive base layer 80 and tackifier layer 70, in a relatively short time (a few mintues to hours).

This PSA laminate can be further processed by printing and applying the laminate to a substrate. Alternatively, a liner may be combined with the PSA laminate if the PSA laminate shall be collected for later use.

The PSA laminate can be utilized to produce many articles of manufacture including, but not limited to, labels, decals, tapes, and films.

In one embodiment of the invention, a label is provided. The label comprises at least one PSA laminate. The label can be selected from filmic labels, such as linerless filmic labels, or filmic labels with a release liner. Examples of filmic labels include, but are not limited to, packaging labels and specialty labels. Packaging labels include, but are not limited to,labels used for packaging of beverages, food products, health and personal care products, pharmaceuticals, industrial chemicals, household chemicals or retail products. Speciality labels include, but are not limited to, repositionable labels, removable labels, resealable labels, no-look labels, deep freezer labels and security labels.

In another embodiment of the invention, a tape is provided comprising the PSA laminate. Examples of tapes include, but are not limited to, multi-purpose tapes and specialty tapes. Multi-purpose tapes can be selected from the group consisting of packaging and transportation tapes; paint and spray masking tapes; consumer and office tapes; and bonding and fastening tapes. Specialty tapes can be selected from the group consisting of surface protection tapes; electrical insulation tapes; binding, reinforcing and marking tapes; splice tapes; HVAC-sealing tapes; medical application tapes; automotive applications tapes; electronic tapes; safety or reflective tapes; and diaper closure tapes.

In another embodiment of the invention, a film is provided comprising the PSA laminate. Such films include, but are not limited to, adhesive films, barrier films, protective films, and cling films. Adhesive films can be selected from the group consisting of pressure sensitive adhesive films, heat activated adhesive films, single and double-sided adhesive layers, carpet underlayment, roofing underlayment, clear or colored films, food contact adhesive films, and backing layer films. Backing layer films include, but are not limited to, backing layer films used to support a drug matrix, multi-purpose backing layer films, or substrate-specific backing layer films. Substrate-specific backing layer films include, but are not limited to, backing layer films for nonwovens, glass, paper, cotton, mineral wool, polyethylene, polypropylene, nylon, polyester, polyurethane foams/sheets, and acrylic adhesives.

Barrier films include, but are limited to, flexible food packaging; film barriers to odor, organic aromas and flavors, moisture, oxygen, and other gases; heat and impulse sealable barrier films, printable barrier films, corona treated barrier films, ostomy appliances, pharmaceutical blister packs, cap liners, bags, and textile lamination for protective clothing.

Protective films include, but are not limited to, films laminated to solid structures. Examples include, but are not limited to, protective films on corrugated steel pipe to improve corrosion and abrasion resistance, masking protective films for painted surfaces, reflective films for interior or exterior glass, anti-shatter films for window glass, and glass tinting films. The PSA can also be utilized in films that offer high optical clarity.

Cling films include, but are not limited to, food packaging, industrial applications, and consumer sealable applications. An example of industrial applications is pallet wrap.

Below are examples of the inventive PSA laminates. It should be understood that these are examples and do not limit the use of the inventive PSA to produce articles that are covered in this disclosure.

### Examples

Test methods are specified in the text of Examples 1-4.

The following methods were utilized in 4-21.

Loop tack was determined according to FINAT FTM 9 using stainless steel instead of glass. FINAT is an organization for label converters and has its headquarters in The Hague, The Netherlands.

Peel adhesion was determined following AFERA (European Association for the Self Adhesive Tape Industry) 5001, test method A on species 25 mm wide.

Shear adhesion was determined following AFERA 5012, procedure A on species 25 mm wide.

Melt flow rate was determine according to ASTM D-1238.

### Example 1 - Preparation of Non-Adhesive Laminates 1.1-1.10

A non-adhesive laminate comprised of an outer filmic layer of primarily polypropylene (PP) (80%) and an adhesive base layer of Kraton G1657 TPE (20%) was made on a coextrusion line operating with two Killion 1 inch single screw extruders with 24/1 L/D. The output from the two extruders directly entered a combining block adaptor where the two flow streams were combined to form a 2 layer flow profile with the adhesive base layer (Kraton TPE) on top to produce a combined polymer melt stream. The combined polymer melt stream entered a 6 inch wide film die where the flow profile spread out into the final laminate dimension to produce the non-adhesive laminate. The non-adhesive laminate was cast onto a chill roll at 30°C and wound into rolls with release paper applied between the layers to prevent possible sticking. The extrusion parameters are tabulated below.

**Table 1**

| Extruder | Zone 1 | Zone 2 | Zone 3 | Rpm | Feedblock | Die | Layer Thickness | Chill Roll |
|---|---|---|---|---|---|---|---|---|
| Kraton G1657 TPE | 200°C | 205°C | 205°C | 25 | 220°C | 225°C | 6 mils | 30°C |
| Huntsman P4G2Z PP | 190°C | 220°C | 220°C | 100 | 220°C | 225°C | 27 mils | 30°C |

The coextruded non-adhesive laminate rolls exhibited edges comprised of 100% Kraton TPE due to the fact that the TPE flowed more to the edges in the film die than the outer filmic layer, made from a 1.5 MFR polypropylene homopolymer. Polypropylene with a nominal 4.0 MFR would have given higher flow and better layer distribution in the coextruded non-adhesive laminate.

In non-adhesive laminate sample 1.1, the outer filmic layer contained 100% polypropylene polymer. In non-adhesive laminate sample 1.2, the outer filmic layer contained 90% by weight of the polypropylene polymer combined with 10% by weight of Regalite R-1100 hydrocarbon resin from Eastman Chemical Company. In non-adhesive laminate sample 1.3, the outer filmic layer contained 80% by weight of the polypropylene polymer combined with 20% by weight Regalite R-1100 hydrocarbon resin, while in non-adhesive laminate sample 1.4, the Regalite R-1100 hydrocarbon resin level was increased to 30% by weight. Adding the Regalite R-1100 resin to the polypropylene reduced its melt viscosity, and it was noted that as the amount of the hydrocarbon resin in the outer filmic layer increased the layer distribution became more uniform due to the lower melt viscosity of the outer filmic layer. In all cases, the nominal laminate thickness was about 33 mils with the adhesive base layer comprising about 18% of the total structure in the center of the samples.

### Preparation of Oriented Nonadhesive Laminates Having Adhesive Base Layer of Kraton® TPE

Each of the thick, non-adhesive laminate samples 1.2, 1.3, and 1.4 were stretched into oriented, non-adhesive laminate specimens by stretching 4X by 4X using a tenter frame film stretcher manufactured by the T.M. Long Company. Small specimens 10 cm x 10 cm were inserted into the clips of the stretcher, and the specimens were heated to 140°C. After heating, the non-adhesive laminate specimen was stretched in both directions simultaneously at a strain rate of about 150%/ second until the final laminate dimensions were reached. The nominal thickness of the final oriented, non-adhesive laminates was about 2.2 mils where the laminates retained a surface layer of Kraton G-1657 copolymer about 10 microns thick. The oriented, non-adhesive laminates made from starting laminates 1.2, 1.3, and 1.4 were designated 1.5, 1.6, and 1.7, respectively. The Regalite R-1100 resins in the outer filmic layer made the layer easier to stretch, and it was noted that laminate 1.2 with only 10% Regalite hydrocarbon resin had poorer layer uniformity than the other two laminates. These laminates did not exhibit good film flatness which made subsequent coating of the surface of the adhesive base layer more difficult. None of the oriented, non-adhesive laminates exhibited measurable tack or adhesion properties.

In a similar manner, the starting non-adhesive laminate specimens 1.2, 1.3, and 1.4 were stretched 3 X 3 into oriented, non-adhesive laminates at 140°C at a draw strain rate of about 250% per second using the same T.M. Long tenter frame stretcher with the final non-adhesive laminate samples designated as 1.8, 1.9, and 1.10. The average oriented, non-adhesive laminate thickness was about 95 microns and significant thickness variability was noted largely due to the excessively high draw strain rate. Again, laminates with the highest Regalite hydrocarbon resin concentration exhibited the best stretch behavior. The oriented non-adhesive laminates exhibited visible surface irregularities. None of the oriented non-adhesive laminates exhibited measurable tack or adhesion properties.

### Example 2 - Coating of Oriented, Nonadhesive Laminate Specimens 1.9 and 1.10

Oriented non-adhesive laminates 1.9 and 1.10 that had been oriented 3 X 3 to a nominal 95 microns thickness having an adhesive base layer of Kraton G-1657 copolymer about 16 microns thick were noted to possess negligible adhesive properties. A solution of Regalrez 1018 liquid hydrogenated tackifier resin in cyclohexane was coated onto the surface of the adhesive base layer of the oriented, non-adhesive laminate using a wire wrapped coating rod to produce PSA laminates 2.1, 2.2, and 2.3. Enough cyclohexane was added to reduce the viscosity so that the tackifier resin could be easily coated. The coating was performed so that the amount of dried Regalrez 1018 applied was about 30% - 40% by weight of the starting nonadhesive laminate specimen weight.

Initially, the surface of PSA laminates 2.1, 2.2, and 2.3 were very slimy due to the coating of the liquid tackifier resin. After aging the PSA laminates for 2 hours in an oven at 60°C, the surfaces of PSA laminates 2.1, 2.2, and 2.3 were converted to a tacky state that was very different from the initial dried surface coating of Regalrez 1018 tackifier resin. The 180° peel values of the tackified PSA laminates were measured using ASTM D-3330 as a guide. PSA laminates 2.1, 2.2, and 2.3 were cut into 1 inch wide strips which were press applied to stainless steel panels, and the 180° peel properties were measured with the peel values reported in units of kgf /25 mm width.

**Table 2**

| Example No. | Oriented Nonadhesive Laminate | PSA Laminates | Coating (% Wt. Gain) | Regalrez 1018 To Kraton G Ratio | Peel Force (kg_{f} / 25 mm. width) Average Range |
|---|---|---|---|---|---|
| 1.1 | 1.9 | 2.1 | 39% | 2.2 | 1.09 0.84-1.23 |
| 1.2 | 1.10 | 2.2 | 31% | 1.7 | 1.34 0.89-1.59 |
| 1.3 | 1.10 | 2.3 | 41% | 2.3 | 1.56 1.45-1.67 |

The non-adhesive laminates were observed to demonstrate minimal tack or PSA adhesion to the metal substrate. Immediately after applying and air drying the Regalrez 1018 tackifier resin, the surface was slimy with very sticky character but with little adhesive strength because the coating was simply a viscous liquid. After aging for about an hour at 60°C, the liquid tackifier resin diffused into the adhesive base layer (Kraton G1657 TPE) so that the surface became a tacky semisolid exhibiting typical viscoelastic properties of a PSA formulation. The peel forces measured from these specimens represent good PSA adhesion.

### Example 3 - Coating of Oriented Nonadhesive Laminate Specimens 1.6 and 1.7

Specimens of oriented nonadhesive laminate samples 1.6 and 1.7 were coated with an 80% solution of Regalrez 1018 tackifier resin in cyclohexane using a wire wrapped rod in order to achieve a dried coating weight applied to the surface of the adhesive base layer (Kraton G TPE) amounting to about 40% to 50% by weight of the starting oriented non-adhesive laminate weight to produce PSA laminates 3.1-3.4. The starting oriented non-adhesive laminates exhibited minimal tack or adhesion properties, but after coating, drying, and aging the PSA laminates for 1 hours at 60°C, the PSA laminates were noted to behave like a PSA. The PSA laminates were cut into 1 inch wide specimens applied to stainless steel panels to form test specimens for both 180° peel testing and loop tack testing. The 180° peel values were measured using ASTM D-3330 as a guide. Loop tack adhesion values were measured using ASTM D-6195 method as a guide. The adhesion properties measured for these PSA laminates are listed below.

**Table 3**

| Example No. | Oriented Nonadhesive Laminate | PSA Laminate | Coating Wt. Gain | Regalrez 1018 to Kraton G Ratio | Loop Tack (Kg force) | 180° Peel (Oz. / in width) |
|---|---|---|---|---|---|---|
| 3.1 | 1.6 | 3.1 | 47% | 2.6 | 1.90 | -- |
| 3.2 | 1.6 | 3.2 | 55% | 3.1 | -- | 1.40 |
| 3.2 | 1.7 | 3.3 | 43% | 2.4 | 1.33 | -- |
| 3.4 | 1.7 | 3.4 | 50% | 2.8 | -- | 1.48 |

Again, diffusion of the applied liquid tackifier layer into the adhesive base layer (Kraton G TPE) of the oriented non-adhesive laminate converted the originally non-tacky adhesive base layer surface into a PSA laminate exhibiting good PSA properties after aging. Because of variations in laminate thickness across the specimens combined with variability in coating weight across the specimens, there was undesirable variation in the ratio of applied tackifier to TPE at the surface. This resulted in substantial variation in PSA properties across the specimens. However, these examples serve to demonstrate the principle that when a tackifier formulation is applied to the surface of the adhesive base layer of a coextruded non-adhesive laminate construction, the tackifier species can diffuse into the adhesive base layer (TPE) with time so that the final PSA laminate will exhibit PSA properties dependent on the relative amount and type of tackifier coating applied to the adhesive base layer surface.

### Examples 4-9- PE/(SEP)x non-adhesive laminate by coextrusion and casting and having varying amounts of polymer in tackifier composition

Tackifier layer compositions were produced containing (SEP)ₓ copolymer obtained as Kraton G1730 and Regalite R1090 and Regalrez 1018 tackifiers according to the procedure described in more detail in Example 13 for a single composition.

Irganox 1010 antioxidant was also added. The amount of (SEP)ₓ copolymer varied from 0-25% by weight. The amount of tackifier and antioxidant was changed according to the increase in the (SEP)ₓ copolymer. The amounts are specified in Tables 4-9. These compositions were used to produce a tackifier layer (C) on a non-adhesive laminate.

The outer filmic layer of the non-adhesive laminate was made of Sabic low density polyethylene obtained by Sabic Europe in Sittard, The Netherlands, and the adhesive base layer was Kraton G1730 (SEP)ₓ block copolymer. The low density polyethylene had a density of 0.924 and a melt flow index of 0.75 g/10 min at 190°C using a 2.16 kg weight.

In addition, the non-adhesive laminate contained an anti-blocking layer on the surface of the outer filmic layer away from the adhesive base layer. A low density polyethylene containing 3% silica was utilized for the anti-blocking layer.

The nonadhesive laminate was produced by co-extruding the low density polyethylene, (SEP)ₓ block copolymer, and the anti-blocking layer. A cast film extrusion line was utilized having three separate extruders. The extruder for the outer filmic layer contained 6 zones and operated at an inlet temperature of about 170°C and an outlet temperature of about 220°C. The extruders for the adhesive base layer and the anti-blocking layer contained 3 zones and operated at an inlet temperature of about 180°C to 190°C and an outlet temperature of about 210°C. The outer filmic layer of polyethylene represented 32% of the total; the adhesive base polymer represented 12% of the total extruded amount; and the anti-blocking layer amounted to 56% of the total amount extruded. The melt from the extruders were routed to a cloerenblok feed block and then to a Black Clawson Spuitkop die. The die temperature was in the range of about 250°C to about 260°C, and the web speed was 21.3 m/min. After casting, the nonadhesive laminate was cooled and rewound.

The tackifier layer compositions were transfer coated (24 grams per square meter or g/m²) onto the non-adhesive laminate to produce a pressure sensitive adhesive laminate using a hot melt die coater onto a release liner. The pressure sensitive laminates were tested for peel adhesion, loop tack and shear resistance properties, initial, after 1 hr, 24 hrs, 48 hrs, 1 week, 2weeks and 3 weeks. The data are tabulated in Tables 4-9.

It is observed in these examples that generally peel and loop tack decreased in time, except in examples 2 and 3, whereas shear resistance increased in time in all cases. Furthermore, shear resistance was developed faster with higher polymer content in the tackifying layer.

Although not intending to be bound by theory, it is proposed that in forming the PSA layer (B and C) by applying a tackifier layer (C), a portion or all of the tackifier diffuses into the adhesive base layer (B) such that a molecular weight gradient from tackifier layer (C) (low molecular weight) to adhesive base layer (B) (high molecular weight) will form. This leaves a low molecular weight, high-tack layer at the surface of (C) exactly where this functionality is required to create pressure sensitive bonds. Conversely, in the high molecular weight portion of the PSA layer (B & C), improved shear resistance may be observed. These experimental results are consistent with this proposition and reflect the time it takes for the tackifier and adhesive base layer to inter-diffuse.

PSA laminates containing zero and 5% Kraton G1730 (SEP)ₓ in the tackifier layer (C) showed off-setting to the release paper. The offsetting stopped after 1 week of storage at room temperature, again indicating diffusion of the tackifier from the tackifier layer (C) into the adhesive base layer (B).

**Table 4 Example 4: Tackifier Layer (C) : Kraton G1730 (0 wt%) / Regalite R1090 (40.4 wt%) / Regalrez 1018 (59.3wt%) /irg.1010 (0.3wt%)**

| | Initial | 1 Hr | 24 Hrs | 48 Hrs | 1 week | 2 weeks | 3 weeks |
|---|---|---|---|---|---|---|---|
| Peel adhesion to steel AV | **3.6** | **3.8** | **6.6** | **6.5** | **6.3** | **5.2** | **8** |
| (N/25 mm) | | | | | | | |
| SD | (0.5) cf**/s | (0.4) cf**/s | (0.3) | (0.2) cf | (0.7) | (0.6) | (0.7) |
| Failure mode | s | s | Cf**/Iss | */Iss | cf | cf | cf |
| Loop tack to steel AV | **3.9** | **3.5** | **6.3** | **11.8** | **9.2** | **0.9** | **5.8** |
| (N/25 mm) | | | | | | | |
| SD | (0.9) | (1.1) | (0.3) | (2.2) | (1.7) | (0.3) | (2.7) |
| Failure mode | cf/ss | cf/ss | cf/ss | cf/ss | cf/ss | cf/ss | cf/ss |
| Shear adhesion to steel AV | **39** | **35** | **94** | **201** | **478** | **1843** | |
| 1 Kg (min) SD | (2) | (6) | (42) | (33) | (231) | (1310) | |
| Failure mode | cf | cf | cf | cf | cf | cf | |

| | | | | | | | |
|---|---|---|---|---|---|---|---|
| Initial to 48 hrs offsetting of the tackifier layer to release paper and fingers. After 1 week, this was not observed. AV - average SD - standard deviation cf - cohesive failure ss-shp stick Iss - - limited slip stick **total transfer of tackifier layer to steel plate *75% total offsetting of tackifier to steel plate | | | | | | | |

**Table 5 Example 5: Tackifier Layer (C): Kraton G1730 (5.3 wt%) /Regalite R1090 (42.1 wt%) /Regalrez 1018 (51.6 wt%) /Irg.1010 (1.1 wt%)**

| | Initial | 1 Hr | 24 Hrs | 48 Hrs | 1 week | 2 weeks | 3 weeks |
|---|---|---|---|---|---|---|---|
| Peel adhesion to steel AV | **10.5** | **11.9** | **9.2** | **8.9** | **9.9** | **7.7** | **6.9** |
| (N/25 mm) SD | (0.6) | (1.0) | (0.6) | (0.6) | (0.8) | (0.7) | (0.3) |
| Failure mode | cf/ss | cf/ss | cf/ss | cf/lss | cf | cf | |
| Loop tack to steel AV | **4.6** | **8.1** | **7.0** | **6.5** | **1.0** | **9.9** | **9.6** |
| (N/25mm) SD | (1.2) | (1.8) | (1.2) | (1.7) | (0.9) | (1.7) | (2.7) |
| Failure mode | cf/ss | cf/ss | Icf/ss | Icf/ss | Iss | ss | ss |
| Shear adhesion to steel AV | **155** | **167** | **1076** | **>10K** | **>10K** | **>10K** | |
| 1 Kg (min) SD | (7) | (32) | (527) | | | | |
| Failure mode | Cf | cf | cf | | | | |

| | | | | | | | |
|---|---|---|---|---|---|---|---|
| Initial to 48 hrs offsetting of the tackifier layer to release paper and fingers. After 1 week, this was not observed. | | | | | | | |

**Table 6 Example 6: Tackifier Layer (C): Kraton G1730 (10 wt%) /Regalite R1090 (37.5 wt%) /Regalrez.1018 (51.5 wt%) /Irg.1010 (1 wt%)**

| | Initial | 1 Hr | 24 Hrs | 48 Hrs | 1 week | 2 weeks | 3 weeks |
|---|---|---|---|---|---|---|---|
| Peel adhesion to steel AV | **16.5** | **17.0** | **13.9** | **12.1** | **8.0** | **6.5** | **5.9** |
| (N/25 mm) SD | (0.6) | (0.5) | (2.0) | (0.2) | (1.5) | (1.1) | (0.6) |
| | | | | | cf | | |
| Failure mode | Cf | cf | cf | cf 85% | 20% | | |
| Loop tack to steel AV | **21.4** | **12.0** | **18.5** | **8.7** | **7.9** | **9.6** | **3.7** |
| (N/ 25mm) SD | (2.0) | (0.7) | (0.8) | (3.4) | (0.7) | (1.3) | (1.1) |
| Failure mode | Cf/ss | cf/ss | lcf/ss | lcf/ss | lcf/ss | ss | ss |
| Shear adhesion to steel AV | **94** | **108** | **>10K** | **>10K** | **>10K** | **>10K** | |
| 1 Kg (min) SD | (9.7 | (40) | | | | | |
| Failure mode | | | | | | | |

**Table 7 Example 7 - Tackifier Layer (C): Kraton G1730 (15 wt%) / Regalite R1090 (34.9 wt%) /Regalrez 1018 (49 wt%) /Irg.1010 (1 wt%)**

| | Initial | 1 Hr | 24 Hrs | 48 Hrs | 1 week | 2 weeks | 3 weeks |
|---|---|---|---|---|---|---|---|
| Peel adhesion to steel AV | **17.2** | **16.6** | **14.7** | **14.3** | **7.5** | **6.5** | **6.3** |
| (N/25mm) SD | (0.3) | (0.6) | (2.2) | (1.5) | (1.6) | (0.6) | (0.3) |
| Failure mode | Cf | Cf | cf 75% | cf 35% | | | |
| Loop tack to steel AV | **34.1** | **36.4** | **5.8** | **11** | **10.7** | **10.4** | **8.1** |
| (N/25 mm) SD | (0.4) | (1.6) | (2.1) | (2.8) | (1.2) | (2.8) | (1.0) |
| Failure mode | Cf | Cf | lcf/ss | lcf/ss | ss | | |
| Shear adhesion to steel AV | **135** | **223** | **>10K** | **>10K** | **>10K** | **>10K** | **>10K** |
| 1 Kg (min) SD | (26) | (36) | | | | | |
| Failure mode | Cf | Cf | | | | | |

**Table 8 Example 8 - Tackifier Layer (C): Kraton G1730 (20 wt%) / Regalite R1090 (32.5 wt%) /Regalrez 1018 (46.5 wt%) / Irg.1010 (1 wt%)**

| | Initial | 1 Hr | 24 Hrs | 48 Hrs | 1 week | 2 weeks | 3 weeks |
|---|---|---|---|---|---|---|---|
| Peel adhesion to steel AV | **18.1** | **16.8** | **13.3** | **12.6** | **7.0** | **5.5** | **5.4** |
| (N/25mm) | | | | | | | |
| SD | (1.4) | (0.4) | (1.7) | (3.0) | (1.4) | (0.7) | (0.3) |
| Failure mode | cf 40% | cf 40% | | | | | |
| Loop tack to steel AV | **17.9** | **17.6** | **15.7** | **11.4** | **14.4** | **10.7** | **8.6** |
| (N/25 mm) | | | | | | | |
| SD | (1.6) | (4.6) | (3.6) | (1.8) | (0.9) | (2.6) | (1.6) |
| Failure mode | lcf/ss | lcf/ss | lcf/ss | lcf/ss | Iss | | |
| Shear adhesion to steel AV | **>10K** | **>10K** | **>10K** | **>10K** | **>10K** | **>10K** | **>10K** |
| 1 Kg (min) SD | | | | | | | |
| Failure mode | | | | | | | |

**Table 9 Example 9 - Tackifier Layer Composition: Kraton G1730 (25.2 wt%) / Regalite R1090 (44.3 wt%) / Regalrez 1018 (30.2 wt%) / Irg.1010 (0.3 wt%)**

| | Initial | 1 Hr | 24 Hrs | 48 Hrs | 1 week | 2 weeks | 3 weeks |
|---|---|---|---|---|---|---|---|
| Peel adhesion to steel AV | **9.7** | **13.9** | **7.5** | **6.4** | **5.3** | **5.3** | **4.4** |
| (N/25 mm) SD | (2.1) | (1.1) | (0.5) | (0.6) | (0.8) | (1.1) | (0.7) |
| Failure mode | cf 5% | | | | | | |
| Loop tack to steel AV | **25.3** | **24.1** | **14.2** | **13.5** | **11.2** | **6.7** | **3.4** |
| (N/25mm) SD | (2.9) | (0.7) | (1.2) | (1.0) | (0.9) | (1.5) | (1.1) |
| Failure mode | cf/ss | cf/ss | ss | ss | | | |
| Shear adhesion to steel AV | **>10K** | **>10K** | **>10K** | **>10K** | **>10K** | **>10K** | **>10K** |
| 1 Kg (min) SD | | | | | | | |
| Failure mode | | | | | | | |

As further examples of preparing a PSA laminate, three PSA laminates were prepared in which an adhesive (adhesive base polymer and tackifier) is provided by migration of two non-PSA layers (non-adhesive laminate (B) and tackifier layer (C)into each other. This is shown in Examples 10-14.

For comparative purposes, two PSA laminates were prepared using conventional technology. Comparative Example 15 provides PSAs (PSA 15.1 & 15.2) based on hot melt technology. Example 16 provides a PSA (PSA 16.1) based on solvent technology. The guiding principle for all these experiments is that the final adhesive layers in all the PSAs have the same gross composition and grammage. Since PSA laminate 14.3 also has the same outer filmic layer (BOPP), the adhesive properties of PSA 14.3 can be directly compared to the properties of Comparative PSAs 15.1, 15.2, and 16.1. These results are captured in Table 10.

### Example 10 - Non-adhesive Laminate 10.1 (SEP)ₓ on PE by co-extrusion and film blowing)

The outer filmic layer of the non-adhesive laminate was made of low density polyethylene obtained from Sabic Europe in Sittard, The Netherlands (Sabic 2201 TH 00), and the adhesive base layer was (SEP)ₓ block copolymer as Kraton G1730, obtained from Kraton. The low density polyethylene had a melt flow index of 0.8 g/10 min at 230 °C using a 2.16 kg weight. In addition, the non-adhesive laminate contained 5% by weight of an anti-blocking additive and 1% by weight of a processing aid in the adhesive base layer.

The non-adhesive laminate was produced by co-extruding the low density polyethylene and the (SEP)ₓ block copolymer. A blown film extrusion line was used having five separate extruders. Two extruders were used to provide the outer layer, which is the outer filmic layer, and the inner layer, which is the adhesive base layer. The other three extruders were used to provide a symmetric five layer film core by splitting the output of two extruders. Each extruder had at least five heating zones. The polyethylene was heated from 170 °C to 200 °C in the first four zones, whereas the (SEP)ₓ block copolymer was heated from 190 °C to 230 °C in the first four zones. A pressure profile was chosen across the non-adhesive laminate with the layers in the center extruded at the highest pressures. Finally, the throughput of the extruders was chosen such that a 64 micrometer polyethylene outer filmic layer with a 13 micrometer (SEP)ₓ adhesive base layer was obtained. The non-adhesive laminate 10.1 was produced at 16 m/min and a width at production of 60 cm.

### Example 11 - Non-adhesive laminate 11.1 (SEP)ₓ on PP by co-extrusion and film blowing)

The outer filmic layer of non-adhesive laminate 11.1 was made of polypropylene obtained from Borealis (BorealisRB707CF), and the adhesive base layer was Kraton G1730 (SEP)ₓ block copolymer obtained from Kraton, The Netherlands. The polypropylene had a melt flow index of 0.9 g/10 min at 230 °C using a 2.16 kg weight. In addition, non-adhesive laminate 11.1 contained 5 % of an anti-blocking additive in the adhesive base layer.

Non-adhesive laminate 11.1 was produced by co-extruding the polypropylene and the (SEP)ₓ block copolymer. A blown film extrusion line was used having five separate extruders. Two extruders were used to provide an outer filmic layer and an inner adhesive base layer. The other three extruders were used to provide a symmetric five layer film core by splitting the output of two extruders. Each extruder had at least five heating zones. Therefore, there were six layers of polypropylene (jointly forming the outer filmic layer (A)) and one layer of (SEP)ₓ block copolymer (adhesive base layer (B)). The polypropylene was heated from 180 °C to 225 °C in the first four zones, whereas the (SEP)ₓ block copolymer was heated from 190 °C to 250 °C in the first four zones. A pressure profile was chosen across non-adhesive laminate 11.1 with the layers in the center extruded at the highest pressures. Finally, the throughput of the extruders was chosen such that a 39 micrometer polypropylene outer filmic layer with a 12 micrometer (SEP)ₓ adhesive base layer was obtained. Non-adhesive laminate 11.1 was produced at 15 m/min and a width at production of 60 cm.

### Example 12 - Non-Adhesive Laminate 12.1 (SEP)ₓ on BOPP by solvent coating)

A 33 wt. % solution of (SEP)ₓ as Kraton G 1730 copolymer was prepared by adding 240 g of Kraton G1730 to 480 g of toluene in a solvent resistant plastic 1 L flask. 2 g of antioxidant Irganox 1010 were added. The mixture was placed on a low speed roller bank for four days to provide a clear solution of Kraton G1730 copolymer.

The Kraton G1730 solution was coated on 36 µm biaxially oriented polypropylene (BOPP, released prior to coating to facilitate unwind) using equipment from RK Print Coat Instruments, Ltd. located in Lithington, UK, at room temperature at a speed of around 5 m/min. An adjustable gap between rolls was used to control coating weight. The solvent was removed from the non-adhesive laminate in four dryer sections at respectively 90°C, 110°C, 110°C, and 110°C. BOPP/Kraton G1730 non-adhesive laminate with a TPE coating weight between 10-14 g/m² was obtained.

### Example 13 - Preparation of tackifier composition

Tackifier layer compositions were produced containing 37.5 % Regalite R1090 and 51.5 % Regalrez 1018 tackifiers, 10 % (SEP)ₓ copolymer obtained as Kraton G1730 and 1 % Irganox 1010 antioxidant in a Z-blade mixer (Linden, Marienheide, Germany) with an effective volume of approximately 1 L.

To meet the required initial fill levels of this equipment and to meet adopted best practice for this type of equipment with regards to polymer/tackifier ratio, initially a mixture containing 15 % (SEP)ₓ polymer was prepared, followed by a dilution to 10 % polymer.

The Z-blade mixer was initially filled with 150 g of Kraton G1730, 10.5 g Irganox 1010 antioxidant and 75 g Regalite R 1090. The Z-blade mixing chamber was heated using an oil bath with a set-point of 170 °C to provide an internal temperature in the mixer of approximately 150 °C. These components were mixed to a homogeneous product in 50 minutes with regular removal of copolymer and tackifier from the sides of the Z-blade mixer. To this mixture, a further 275 g of Regalite R1090 tackifier was added in portions, followed by 490.5 g Regalrez 1018 tackifier in portions. 300 g of this tackifier/copolymer mixture was removed, and a further 149.1 g Regalite R0190 tackifier, 3 g Irganox 1010 antioxidant and 197 g Regalrez 1018 tackifier were added in portions to the remaining 700g of mixture to obtain 1050 g of tackifier layer composition. The product was poured into a paper box coated with silicone release and cooled to room temperature for further use.

### Example 14 - PSA Formation from Non-Adhesive Laminates 10.1, 11.1, and 12.1 (Examples 10-12) by transfer coating the non-adhesive laminates with the tackifier composition according to example 13 to provide PSA 14.1, 14.2, and 14.3.

The tackifier composition of Example 13 was coated at 24 grams at 110°C onto a silicone based release liner, using a slot die coater, which was than laminated on the tackifier composition side with non-adhesive laminates from Examples 10-12 (tackifier to Kraton G1730 copolymer side) to provide PSA laminates 14.1, 14.2, and 14.3, respectively. Coating equipment supplied by Bobis located in Bobis, Apeldoorn, The Netherlands was used at a line speed of around 40 m/min. Speed was varied to control coating weight. Similar equipment is available through LC Maan Engineering, Raalte, The Netherlands.

The PSA laminates with a coating weight between 34-36 g/m² were slitted into rolls of 5 cm width and stored overnight in a climatized control room at 23°C and 50% relative humidity prior to testing. The PSA laminates were tested for peel adhesion, loop tack and shear resistance properties after 24 hrs, 1 week and 3 weeks according to methods previously described in this disclosure. The data are tabulated in Table 10.

### Example 15 - Preparation of Comparative PSA laminates 15.1 and 15.2 (Adhesive base polymer and tackifier on BOPP by slot die or roll axis method)

To a Z-blade mixer Linden LK-II with thermostated oil bath heating, 400 grams of Kraton G1730 copolymer, 7 grams of Irganox 1010 antioxidant, and 200 grams Regalite R1090 tackifier were added. The Z-blade mixing chamber was heated using an oil bath with a set-point of 170°C to provide an internal temperature in the mixer of approximately 150 °C. Resin or copolymer sticking to the inner surface was cut loose every five minutes with a hot spatula until a homogeneous mixture was obtained after 1 hour. A further 50 g of Regalite R1090 tackifier were added to the mixer, followed by the addition in parts of 343 grams of Regalrez 1018 tackifier. Finally, the warm hot melt formulation was poured into a cardboardbox with silicon inner liner to provide approximately 1 kg of hot melt adhesive.

The hot melt adhesive was coated on 36 µm biaxially oriented polypropylene (BOPP, released prior to coating to facilitate unwind) using roll axle (lVa) or slot die (lVb) coating equipment from Bobis at 180°C at a speed of around 40 m/min to produce Comparative PSAs 15.1 and 15.2. Coating equipment supplied by Bobis located in Bobis, Apeldoorn, The Netherlands was used at a line speed of around 40 m/min. Speed was varied to control coating weight. Similar equipment is available through LC Maan Engineering, Raalte, The Netherlands Speed was varied to control coating weight. PSAs 15.1 and 15.2 with a coating weight between 34-36 g/m² were slitted into rolls of 5 cm width and stored overnight in a climatized control room at 23°C and 50% relative humidity prior to testing.

The PSA laminates (15.1 and 15.2) were tested for peel adhesion, loop tack and shear resistance properties, initial, after 24 hrs, 1 week and 3 weeks according to methods previously described in this disclosure. The data are tabulated in Table 10.

### Example 16 - Preparation of Comparative PSA Laminate 16.1 (Adhesive Base Polymer and Tackfier on BOPP using solvent/RK coater)

A solution of 33 wt.% Kraton G1730 copolymer was prepared by adding 144 grams (SEP)ₓ as Kraton G1730 copolymer to 288 grams toluene and placing the mixture for 48 hours on a low speed roller bank. To the resulting solution, 90 grams Regalite R1090 tackifier, 125.5 grams Regalrez 1018 tackifier, and 2.5 grams Irganox 1010 anti-oxidant were added. After a further 24 hours on the roller bank, a 55 wt% solids adhesive was obtained.

The adhesive was coated on 36 µm biaxially oriented polypropylene (BOPP, released prior to coating to facilitate unwind) using equipment from RK Print Coat Instruments Ltd. , at room temperature at a speed of around 5 m/min to produce PSA 16.1. An adjustable gap between rolls was used to control coating weight. The solvent was removed from PSA 16.1 in four dryer sections at respectively 90°C, 110°C, 110°C and 110°C. The PSA with a coating weight between 34-36 g/m² were slitted into rolls of 5 cm width and stored overnight in a climatized control room at 23°C and 50% relative humidity prior to testing.

PSA laminate 16.1 was tested for peel adhesion, loop tack and shear resistance properties, initial, after 24 hrs, 1 week and 3 weeks according to methods previously described in this disclosure. The data are tabulated in Table 10.

**Table 10**

| Property | PSA Laminate | Time 1 day | 1 week | 3 weeks | Remarks |
|---|---|---|---|---|---|
| Peel (N/25 mm) | 14.1 | 22 | 24 | 18 | elongation > 5 cm |
| | 14.2 | 16 | 14* | 14* | elongation > 5 cm |
| | 14.3 | 14* | 16* | 17* | |
| | 15.1 | 8 | 5 | 5 | |
| | 15.2 | 8 | 7 | 7 | |
| | 16.1 | 5 | 5 | 6 | |
| | | | | | |
| Tack (N/25mm) | 14.1 | 23 | 21 | 12 | slip stick for each sample |
| | 14.2 | 22* | 11* | 11* | slip stick for each sample |
| | 14.3 | 27* | 17* | 23* | |
| | 15.1 | 15 | 10 | 10 | |
| | 15.2 | 16 | 13 | 12 | |
| | 16.1 | 10 | 10 | 9 | |
| | | | | | |
| Shear 1 kg/steel (minutes) | 14.1 | 3421 | > 10000 | > 10000 | |
| | 14.2 | 394 | > 10000 | > 10000 | |
| | 14.3 | 172 | > 10000 | > 10000 | |
| | 15.1 | > 10000 | > 10000 | > 10000 | |
| | 15.2 | > 10000 | > 10000 | > 10000 | |
| | 16.1 | > 10000 | > 10000 | > 10000 | |

| | | | | | |
|---|---|---|---|---|---|
| *=cohesive failure | | | | | |

Clearly, laminates 14.1, 14.2 and 14.3 are PSAs based on the peel adhesion, loop tack, and shear adhesion data. The definition of PSA was previously described in this disclosure. The peel and loop tack values for PSA 14.3 are higher than for comparable laminates PSAs 15.1, 15.2, and 16.1. Shear adhesion and loop tack are time dependent for PSAs 14.1, 14.2, and 14.3 , with typically initial high loop tack values and low shear values. The properties change over time to obtain PSAs which are at least comparable or better in adhesive properties than comparative PSAs 15.1, 15.2, and 16.1 prepared using conventional methods.

Notwithstanding the above, the formation of an adhesive layer of a PSA by migration of the tackifier into the adhesive base layer can provide many other benefits. Benefits include at least one of the following: processing advantages and advantages for other properties, such as, color, smell, clarity, gloss, haze, and anchorage. Processing advantages include: 1) lower processing temperatures which improve a number of properties such as color and smell, and 2) lower viscosities allowing very smooth and defect free surfaces improving the optical properties of the PSA laminate. In addition to providing enhanced properties, economic benefits may be obtained. Lower temperatures require less energy, and lower viscosities enable higher line speeds. The coextruded melt bond of the filmic polymer and the adhesive base layer eliminates the presence of a discrete interface between adhesive and filmic backing as in conventional PSAs. This enhances the visual appearance of the inventive PSAs over conventional PSAs, since the risk of interface defects as resulting from poor flow, entrainment of air or poor wettability, and any scatter, are eliminated.

Another advantage of this invention is that the PSA laminate has improved clarity and haze since the low viscosity of the tackifier composition provides excellent wettability of the non-adhesive laminate and provides a smooth coated surface. A common problem in conventional PSAs is inadequate wetting of the adhesive to the facestock or insufficient flow, resulting in contact or surface defects, reducing the visual appearance of the PSA laminate.

### Example 17 - Dispersion Coating of Tackifier Layer

The tackifying composition of Example 13 was formulated as an dispersion by heating 100 grams of the tackifying composition, 9 grams of a hydrogenated rosin acid (Staybellite resin E, Eastman Chemical Company, Middelburg, the Netherlands) and 2.2 grams 50 wt.% KOH in water. The latter two components serve as a tackifying surfactant system. Then, under vigorous stirring, slowly approximately 100 grams of water were added at 90 °C, followed by cooling. A dispersion of the tackifying resin was obtained at 52 wt% solids with a particle size of 258 nm as measured by Coulter type particle size equipment and a viscosity of 500 mPas.
The dispersion was coated onto A4 sheets of non-adhesive laminates 14.1, 14.2, and 14.3 using a K-bar type 6 to provide a 24 gram tackifying layer (C)after drying the PSA laminates for 2 minutes at 100 °C to produce PSAs 18.1, 18.2, and 18.3. All PSA laminates had a shear strength of > 10000 minutes) in 1 week at 23 °C, and a peel strength of > 10 N/25 mm after ageing for three weeks.

### Example 18 - Non-adhesive Laminate 18.1 (SEP)ₓ and PE by co-extrusion and casting)

The outer filmic layer of the non-adhesive laminate was made of Sabic low density polyethylene obtained from Sabic Europe in Sittard, The Netherlands, and the adhesive base layer was Kraton G1730 (SEP)ₓ block copolymer. The low density polyethylene had a density of 0.924(g/cm³) and a melt flow index of 0.75 g/10 min at 190°C using a 2.16 kg weight. In addition, the non-adhesive laminate contained an anti-blocking layer on the surface of the outer filmic layer away from the adhesive base layer. A low density polyethylene containing 3% silica was utilized for the anti-blocking layer.

The non-adhesive laminate was produced by co-extruding the low density polyethylene, (SEP)ₓ block copolymer, and the anti-blocking layer. A cast film extrusion line was utilized having three separate extruders. The extruder for the outer filmic layer contained 6 zones and operated at an inlet temperature of about 170°C and an outlet temperature of about 220°C. The extruders for the adhesive base layer and the anti-blocking layer contained 3 zones and operated at an inlet temperature of about 180°C to 190°C and an outlet temperature of about 210°C. The anti-blocking layer of polyethylene with silica had a thickness of 50 micrometer; the core poly(ethylene) filmic layer had a thickness of 30 micrometer, and the adhesive base layer had a thickness of 30 micrometer. The melt from the extruders was routed to a cloerenblok feed block and then to a Black Clawson Spuitkop die. The die temperature was in the range of about 250°C to about 260°C, and the web speed was 21.3 m/min. After casting, non-adhesive laminate 18.1 was cooled and rewound.

### Example 19 - PSA Formation Using Non-Adhesive Laminate 18.1

### by transfer coating the Non-Adhesive Laminate 18.1 with tackifier composition from Example 13 to produce PSAs 19.1-19.5.

The tackifier composition of Example 13 was coated at 30, 50, 70, 90 and 125 g/m² at 110°C onto a silicone based release liner, using a slot die coater, which was than laminated on the tackifier composition side with non-adhesive laminates from examples 18 (tackifier to Kraton G1730 copolymer side) to provide pressure sensitive adhesive laminates (PSAs 19.1, 19.2, 19.3, 19.4, and 19.5). Coating equipment supplied by Meltex now Nordson, Luneburg Germany,was used at a line speed between 3 and 11 m/min. Speed was varied to control coating weight. Low speed corresponds to high coating thickness. The PSA laminates were stored overnight in a climatized control room at 23°C and 50% relative humidity prior to testing.

The PSA laminates were tested for peel adhesion, loop tack and shear resistance properties after 24 hrs, 4 days, 1 week, 2 weeks and 3 weeks according to methods described previously in this disclosure. The data are tabulated in Table 11.

**Table 11. Effect of tackifying layer amount on property development**

| Property | PS A | Tackifying layer amount (gram/m²) | Time | | | | |
|---|---|---|---|---|---|---|---|
| | | | 1 day | 4day | 1 week | 2 week | 3 week |
| Peel (N/25mm) | 19.1 | 30 | 14 | 1 | ND | ND | ND |
| | 19.2 | 50 | 29 | 6 | 5 | 3 | 2 |
| | 19.3 | 70 | 31 | 32 | 28 | 4 | 6 |
| | 19.4 | 90 | 36 | 34 | 32 | 24 | 21 |
| | 19.5 | 125 | 40 | 36 | SD | SD | SD |
| Loop Tack (N/25mm) | 19.1 | 30 | 10 | 1 | ND | ND | ND |
| | 19.2 | 50 | 19 | 13 | 3 | 1 | 3 |
| | 19.3 | 70 | 23 | 26 | 19 | 12 | 6 |
| | 19.4 | 90 | 29 | 28 | 27 | 30 | 13 |
| | 19.5 | 125 | 29 | 28 | 22 | 28 | 25 |
| Shear 23 °C, 1kg (min) | 19.1 | 30 | 87 | 700 - 10k | >10000 | >10000 | >10000 |
| | 19.2 | 50 | 62 | 204 | 452 | > 10000 | >10000 |
| | 19.3 | 70 | 35 | 45 | 91 | 254 | 783 |
| | 19.4 | 90 | 22 | 26 | 45 | 93 | 115 |
| | 19.5 | 125 | 16 | 19 | 25 | 48 | 31 |

| | | | | | | | |
|---|---|---|---|---|---|---|---|
| ND - Not Determinated SD - Substrate Destruction - In this case, the peel is so high that the outer filmic layer tears. | | | | | | | |

These examples demonstrate that the adhesive properties of the PSA laminates can be widely varied with variation of the thickness of the tackfying layer. This is very useful in providing different adhesive properties from a single non-adhesive laminate. Also, a large range of tackfying layer thicknesses can be used to provide PSA laminates with useful properties.

### Example 20 Non-Adhesive Laminate 20.1 (Kraton G 1730 copolymer on PE by co-extrusion and film blowing)

The outer filmic layer of the non-adhesive laminate was made of low density polyethylene obtained from Sabic Europe in Sittard, The Netherlands (Sabic 2201 TH 00), and the adhesive base layer was Kraton G1730 (SEP)ₓ SEPS block copolymer obtained from Kraton. The low density polyethylene had a melt flow index of 0.8 g/10 min at 190°C using a 2.16 kg weight. In addition, the non-adhesive laminate contained 5% by weight of an anti-blocking additive and 1 % by weight of a processubg aid. A film blown process similar to the one used in Example 10 was used to provide a 85 micrometer polyethylene filmic outer layer with a 6 micrometer (SEP)ₓ adhesive base layer. The roll had a width at production of 70 cm and was re-slit to 50 cm and 20 cm rolls.

### Example 21 - PSA formation from Non-Adhesive Laminate 20.1 according to Example 20 by transfer coating the Non-Adhesive Laminate with a Tackifier Compositionl according to example 13 to provide PSAs 21.1-21.3.

The tackifier composition of Example 13 was coated at 10, 15 and 20 g/m² at 110 °C onto a silicone based release liner, using a slot die coater, which was then laminated on the tackifier composition side with non-adhesive laminates from Example 20 (tackifier to Kraton G1730 side) to provide PSA laminates 21.1, 21.2, and 21.3. Coating equipment supplied by Meltex now Nordson, Luneburg Germany was used at a line speed between 19-39 m/min. Speed was varied to control coating weight. Low speed corresponds to high coating thickness. The PSA laminates were stored overnight in a climatized control room at 23°C and 50% relative humidity prior to testing.

The PSA laminates were tested for peel adhesion, loop tack and shear resistance properties after 24 hrs, 2 days, 1 week, 2 weeks and 3 weeks according to methods described previously in this disclosure. The data are tabulated in Table 12.

**Table 12. Effect of tackifying layer amount on property development**

| Property | PS A No. | Tackfying layer amount (gram/meter²) | Time | | | | |
|---|---|---|---|---|---|---|---|
| | | | 1 day | 2 day | 1 week | 2 week | 3 week |
| Peel (N/25mm) | 21.1 | 10 | 14 | 13 | 10 | 10 | 11 |
| | 21.2 | 15 | 20 | 20 | 20 | 18 | 20 |
| | 21.3 | 20 | 22 | 23 | 23 | 24 | 24 |
| Loop Tack (N/25mm) | 21.1 | 10 | 14 | 9 | 2 | 2 | 1 |
| | 21.2 | 15 | 26 | 26 | 10 | 13 | 12 |
| | 21.3 | 20 | 35 | 34 | 29 | 27 | 32 |
| Shear 23 °C, 1kg | 21.1 | | | | | | |
| (min) | | 10 | 149 | 207 | > 750 | >1700 | >10000 |
| | 21.2 | 15 | 219 | 248 | > 1000 | >1300 | >10000 |
| | 21.3 | 20 | 196 | 266 | 461 | 904 | 1310 |

These examples demonstrate that the adhesive properties of the PSA laminates can be widely varied with variation of the thickness of the tackifier layer. This is very useful in providing different adhesive properties from a single non-adhesive laminate.

### Example 22 - PSA formation from Non-Adhesive Laminate 20.1 according to Example 20 by transfer coating the Non-Adhesive Laminate with a Tackifier Composition according to example 13 to provide PSA 22.1.

The tackifier composition of Example 13 was coated at 13 g/m² at 100°C onto a silicone based release liner, using a knife-over-roll coater with pressure roll, which was then laminated on the tackifier composition side with non-adhesive laminates from Example 20 (tackifier to Kraton G1730 side) to provide PSA laminate 22.1. Coating equipment supplied by Kroenert Maschinenfabrik Max Kroenert GmbH & Co KG, Hamburg, Germany was used at a line speed of 50 m/min. The PSA laminate was stored overnight in a climatized control room at 23°C and 50% relative humidity prior to testing.

The PSA laminate was tested for peel adhesion, loop tack and shear resistance properties after 24 hrs, 2days, 4 days, 1 week, and 2 weeks according to methods described previously in this disclosure. The data are tabulated in Table 13.

**Table 13. Effect of tackifying layer amount on property development**

| Property | PS A No. | Tackfying layer amount (gram/meter²) | Time | | | | |
|---|---|---|---|---|---|---|---|
| | | | 1 day | 2 days | 4 days | 1 week | 2 weeks |
| Peel (N/25mm) | 22.1 | 13 | 16 | 17 | 16 | 14 | 11 |
| Loop Tack (N/25mm) | 22.1 | 13 | 12 | 11 | 12 | 10 | 2 |
| Shear 23 °C, 1kg (min) | 22.1 | 13 | 58 | 48 | 248 | 426 | 604 |

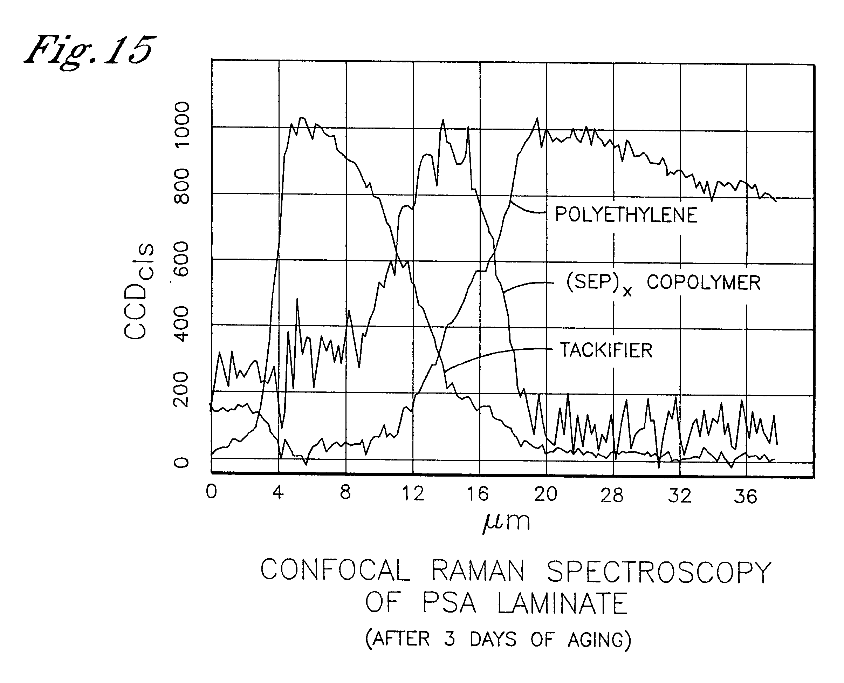

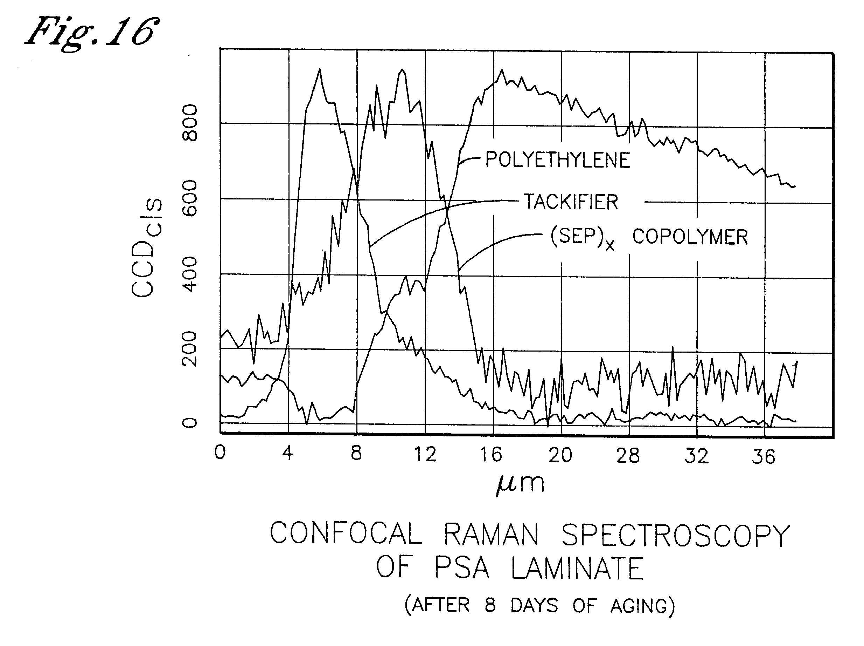

Furthermore, the PSA laminate was examined by confocal Raman spectroscopy (Fig. 15 and 16) using a WiTec Confocal Raman Microscope CRM 200. A Nikon objective, CFI Plan Achromat 100x, NA=0.9 is used without cover glass correction. The laser power used was 15 MW at 532 nm. An in depth analyses was carried out starting from the tackifier layer up to the polyethylene backing layer. Characteristic Raman signals were used to identify the compounds of the original layers:
760-790 cm⁻¹ for the tackifier;
1120-1140 cm⁻¹ for the polyethylene (outer filmic layer); and
3014-3100 cm⁻¹ for the (SEP)ₓ copolymer (adhesive base polymer).

Using the intensities of these signals, cross-sections were obtained showing the concentration of the tackifiers, (SEP)ₓ, and polyethylene as a function of depth (µm).

Depth profiles of the PSA laminate 22.1 were measured after 3 and 8 days of ageing at room temperature, in order to study the migration behaviour of the tackifier. Every analysis was carried out five times at different locations of the PSA laminate. The results of these analyses were averaged over each series of measurements. In order to quantify migration, the distance between the peak values of tackifier signal and adhesive base polymer signal were calculated, followed by a correction of the values by assuming a value of 1.5 of the breaking index for both tackifier and (SEP)ₓ.

It was found that the distance between the peak values for the tackifier and (SEP)ₓ copolymer decreased from 12 micrometer to 7 micrometer between three and eight days of storage. Theoretically, a distance between the peak values of 0 micrometer represents a fully migrated system without compositional differences.

The shear resistance of the PSA laminates increased by almost an order of magnitude over a similar time frame (e.g. 2 days - 1week), as listed in Table 13.

Although not intending to be bound by theory, this implies that the change in adhesive properties over time is related to migration of tackifier into the adhesive base layer as studied by confocal Raman spectroscopy.

## Claims

1. A pressure sensitive adhesive (PSA) laminate comprising:
a. at least one outer filmic layer (A) comprising at least one filmic polymer;
b. at least one adhesive base layer (B) comprising at least one adhesive base polymer; and
c. at least one tackifier layer (C) comprising at least one tackifier and at least one polymer;
wherein said pressure sensitive adhesive laminate is obtainable by co-extruding said outer filmic layer (A) with said adhesive base layer (B) to produce a non-adhesive laminate and applying said tackifier layer (C) to the adhesive base layer side of said non-adhesive laminate to produce said PSA laminate.

2. A PSA laminate according to Claim 1 further comprising at least one layer selected from the group consisting of at least one barrier layer, at least one overlaminate layer, at least one release liner, at least one tie layer, and at least one primer layer.

3. A PSA laminate according to Claim 1 or 2 wherein a release material is located on the outer surface of said outer filmic layer.

4. A PSA laminate according to Claim 3 wherein said release material is a silicone material.

5. A PSA laminate according to any of Claims 1 to 4 wherein said filmic polymer is a blend of filmic polymers or a multi-layer film of various filmic polymers.

6. A PSA laminate according to any of Claims 1 to 5 wherein said filmic polymer.has a solubility parameter that is inconsistent with or incompatible with said adhesive base polymer to prevent migration between said outer filmic layer and said adhesive base layer.

7. A PSA laminate according to any of Claims 1 to 6 wherein said filmic polymer is selected from the group consisting of polystyrenes, polyolefins, polyamides, polyesters, polycarbonates, polyurethanes, polyacrylates, polyvinyl alcohols, polyesters, functional polyesters, poly(ethylene vinyl alcohols), polyether block polyamides, polyvinyl acetates, and mixtures thereof.

8. A PSA according to Claim 7 wherein said filmic polymer is a polyolefin having repeating units selected from the group consisting of ethylene, propylene, and 1-butene.

9. A PSA according to Claim 8 wherein said filmic polymer is at least one selected from the group consisting of polyethylene, polypropylene and ethylene-propylene copolymer.

10. A PSA laminate according to Claim 9 wherein the melt flow rate (MFR) of polyethylene used in said outer filmic layer ranges from about 0.1 to about 15 g/10 minutes measured at 190°C using a 2.16 kg weight.

11. A PSA laminate according to Claim 10 wherein the melt flow rate of polyethylene used in said outer filmic layer ranges from 0.1 to 5 g/10 minutes measured at 190°C using a 2.16 kg weight.

12. A PSA laminate according to Claim 9 wherein the melt flow rate (MFR) of polypropylene used in said outer filmic layer ranges from about 0.1 to about 20 g/10 minutes measured at 230°C using a 2.16 kg weight.

13. A PSA laminate according to Claim 12 wherein the melt flow rate (MFR) of polypropylene used in said outer filmic layer ranges from about 0.1 to about 10 g/10 minutes measured at 230°C using a 2.16 kg weight.

14. A PSA laminate according to any of Claims 1 to 13 wherein said outer filmic layer has a thickness of about 10 µm to about 200 µm.

15. A PSA laminate according to Claim 14 wherein said outer filmic layer has a thickness of about 30 µm to about 90 µm.

16. A PSA laminate according to any of Claims 1 to 15 wherein said adhesive base polymer is at least one selected from the group consisting of at least one random copolymer adhesive base material, at least one block copolymer adhesive base polymer, and at least one natural or synthetic rubber.

17. A PSA laminate according to Claim 16 wherein said random copolymer adhesive base material is selected from the group consisting of copolymers based upon acrylate and/or methacrylate copolymers and their derivatives, α-olefin copolymers, silicone-copolymers, and chloroprene/acrylonitrile copolymers.

18. A PSA laminate according to Claim 16 wherein said block copolymer adhesive base polymer is selected from the group consisting of linear block copolymers, branched block copolymers, di-block copolymers, tri-block copolymers, tetra-block copolymers, multi-block copolymers, star block copolymers, grafted, and radial block copolymers.

19. A PSA laminate according to Claim 16 wherein said natural or synthetic rubber is selected from the group consisting of polyisobutylene, polyisoprene, and butyl rubber.

20. A PSA laminate according to any of Claims 1 to 15 wherein said adhesive base polymer comprises at least one thermoplastic elastomer (TPE).

21. A PSA laminate according to Claim 20 wherein said TPE is a least one selected from the group consisting of linear, branched, graft or radial block copolymers.

22. A PSA laminate according to Claim 21 wherein said thermoplastic elastomers comprise from about 75% to about 95% by weight of rubbery segments and from about 5% to about 25% by weight of non-rubbery segments.

23. A PSA laminate according to Claim 22 wherein said non-rubbery segments comprise polymers of mono- and poly-cyclic aromatic hydrocarbons.

24. A PSA laminate according to Claim 22 wherein said rubbery segments comprise polymer blocks of homopolymers or copolymers of aliphatic conjugated dienes or hydrogenated conjugated dienes.

25. A PSA laminate according to Claim 24 wherein said rubbery segments are selected from the group consisting of polyisoprene, polybutadiene, and styrene butadiene rubbers.

26. A PSA laminate according to Claim 24 wherein said rubbery segments are selected from the group consisting of polydienes, rubbers of ethylene-butylene copolymers and rubbers of ethylene-propylene copolymers.

27. A PSA laminate according to any of Claims 1 to 15 wherein said adhesive base polymer is selected from the group consisting of butadiene-based polymers, isoprene-based polymers, polyether block polyamides, and mixtures thereof.

28. A PSA laminate according to Claim 27 wherein said butadiene-based polymers are selected from the group consisting of styrene-butadiene-styrene (SBS) block copolymers, styrene-butadiene (SB) block copolymers, multi-armed (SB)ₓ block copolymers, polybutadiene block copolymers, and hydrogenated derivatives and mixtures thereof.

29. A PSA laminate according to Claim 27 wherein said isoprene-based copolymers are selected from the group consisting of styrene-isoprene-styrene (SIS) block copolymers, styrene-isoprene-butadiene-styrene (SIBS) copolymers, styrene-isoprene (SI) diblock copolymers, linear and multi-armed (SI)ₓ block copolymers, radial block copolymers having an styrene-ethylene-butadiene-styrene (SEBS) backbone and isoprene and/or styrene-isoprene (SI) arms, polyisobutylene, natural rubber, synthetic polyisoprene, and mixtures thereof.

30. A PSA laminate according to Claim 18 wherein di-block copolymers are selected from the group consisting of styrene-butadiene (SB), styrene-isoprene (SI), and the hydrogenated derivatives thereof.

31. A PSA laminate according to Claim 18 wherein tri-block polymers, tetra-block polymers, and multi-block polymers are selected from the group consisting of styrene-butadiene-styrene (SBS), styrene-isoprene-styrene (SIS), α-methylstyrene-butadiene-α-methylstyrene, α-methylstyrene-isoprene-α-methylstyrene, styrene-isoprene-butadiene-styrene (SIBS), styrene-ethylene/propylene-styrene (SEPS), styrene-ethylene/propylene (SEP)ₓ, and derivatives thereof.

32. A PSA laminate according to Claim 16 wherein said block copolymers are hydrogenated.

33. A PSA laminate according to Claim 16 wherein said block copolymers are functionalized block copolymers.

34. A PSA laminate according to Claim 33 wherein said functionalized block copolymer is succinic anhydride-modified SEBS.

35. A PSA laminate according to any of Claims 1 to 15 wherein said adhesive base polymer is a high cohesive strength polymer selected from the group consisting of styrene block copolymers and isobutylene copolymers.

36. A PSA laminate according to Claim 35 wherein said styrene block copolymers are selected from the group consisting of styrene-isoprene-styrene block copolymers (SIS), copolymers based on styrene and ethylene/butylene (S-E/B-S), and copolymers based on styrene and ethylene/propylene (S-E/P-S).

37. A PSA laminate according to Claim 36 wherein the polystyrene content of the SIS block copolymer ranges from about 10% by weight to about 50% by weight.

38. A PSA laminate according to Claim 35 wherein the solution viscosity of said styrene block copolymers ranges from about 0.05 Pa.s to about 20 Pa.s measured utilizing 25% solids in toluene utilizing a Brookfield viscosimeter.

39. A PSA laminate according to any of Claims 1 to 38 wherein said adhesive base layer has a thickness ranging from about 1 µm to about 60 µm.

40. A PSA laminate according to Claim 39 wherein said adhesive base layer has a thickness ranging from about 4 µm to about 20 µm.

41. A PSA laminate according to any of Claims 1 to 40 wherein said adhesive base layer has been modified by at least one additive selected from the group consisting of pure monomer resins; poly(ethylene) or poly(propylene) waxes; poly(ethylene) with low viscosity, such as polyethylene with a melt flow rate of about 5 g/10min to about 80 g/10min measured at 190°C, 2.16 kg weight, according to ASTM D-1238; and ethylene or propylene based copolymers as produced by metallocene catalysts.

42. A PSA laminate according to any of Claims 1 to 41 wherein said tackifier layer further comprises at least one plasticizer.

43. A PSA laminate according to any of Claims 1 to 42 wherein said tackifier is at least one selected from the group consisting of rosin-based and hydrogenated rosin-based tackifiers, hydrocarbon-based and hydrogenated hydrocarbon-based tackifiers, phenolic-based tackifiers, terpene-based tackifiers, terpene phenolic-based tackifiers, styrenated terpene-based tackifiers, hydrogenated terpene-based tackifiers, polyester-based tackifiers, pure monomer aromatic-based tackifiers, aromatic acrylic-based tackifiers, liquid resin type tackifiers, functionalized type tackifiers, and hydrogenated derivatives and mixtures thereof.

44. A PSA laminate according to Claim 43 wherein said tackifier is a hydrogenated pure monomer aromatic-based tackifier.

45. A PSA laminate according to any of Claims 42 to 44 wherein said plasticizer is at least one selected from the group consisting of naphthenic and paraffinic oils, citrates, sulfonates, and phthalates.

46. A PSA laminate according to any of Claims 1 to 45 wherein said tackifier is soluble in said adhesive base polymer.

47. A PSA laminate according to any of Claims 1 to 46 wherein said tackifier is a tackifier masterbatch composition.

48. A PSA laminate according to Claim 46 or 47 wherein said tackifier is soluble in elastomers containing polystyrene and polyisoprene blocks.

49. A PSA laminate according to Claim 48 wherein said tackifier is obtained by polymerization of a stream of aliphatic petroleum derivatives in the form of dienes and mono-olefins containing 5 or 6 carbon atoms.

50. A PSA laminate according to Claim 49 wherein said dienes are piperylene or isoprene.

51. A PSA laminate according to any of Claims 1 to 42 wherein said tackifier is at least one modified C₅-type petroleum resin made by copolymerizing one or more C₅ monoolefins and/or diolefins with one or more C₈ or C₉ monoalkenyl aromatic hydrocarbons or hydrogenated derivatives thereof.

52. A PSA laminate according to Claim 51 wherein said modified C₅ monoolefins and/or diolefins are selected from the group consisting of isoprene, 2-methyl-1-butene, 2-methyl-2-butene, cyclopentene, 1-pentene, cis- and trans-2-pentene, cyclopentadiene, and cis-trans-1,3-pentadiene.

53. A PSA laminate according to Claim 51 wherein said C₈ or C₉ monoalkenyl aromatic hydrocarbons are selected from the group consisting of styrene, methystyrene, and indene.

54. A PSA laminate according to any of Claims 1 to 42 wherein said tackifier is at least one hydrogenated polycyclic resins or at least one hydrogenated aromatic resin in which a substantial portion, if not all, of the benzene rings are converted to cyclohexane rings.

55. A PSA laminate according to Claim 54 wherein said hydrogenated polycyclic resin is a dicyclopentadiene resin.

56. A PSA laminate according to any of Claims 1 to 55 wherein said tackifier layer further comprises rosins, rosin esters, polyterpenes, aromatic and functionalized resins and other tackifiers that are compatible to some degree with said adhesive base polymer contained in said adhesive base layer.

57. A PSA laminate according to any of Claims 1 to 56 wherein said tackifier layer comprises at least one tackifier in an amount of about 50% to about 90% by weight.

58. A PSA laminate according to any of Claims 1 to 57 wherein said tackifier layer has a thickness of about 2 µm to about 150 µm.

59. A PSA laminate according to any of Claims 1 to 58 wherein said outer filmic layer, said adhesive base layer, and said tackifier layer of the PSA laminate further comprises inorganic fillers, and organic and inorganic additives.

60. A PSA laminate according to Claim 59 wherein said inorganic fillers are selected from the group consisting of calcium carbonate, titanium dioxide, metal articles, and fibers.

61. A PSA laminate according to Claim 59 wherein said additives are selected from the group consisting of flame retardants, antioxidant compounds, heat stabilizers, light stabilizers, ultra-violet light stabilizers, anti-blocking agents, processing aids, nucleating agents, and acid acceptors.

62. A PSA laminate according to any of Claims 1 to 61 wherein said tackifier layer (C) is not a PSA.

63. A PSA laminate according to any of Claims 1 to 62 wherein said PSA laminate has a thickness of about 35 to about 400 µm.

64. A PSA laminate according to Claim 63 wherein said PSA laminate has a thickness of about 50 to about 150 µm.

65. A PSA laminate according to any of Claims 1 to 64 wherein said PSA laminate has a thickness ratio of the outer filmic layer (A) to adhesive base layer (B) from about 50:1 to about 1:1.

66. A PSA laminate according to Claim 65 wherein said PSA laminate has a thickness ratio of A:B from about 25:1 to about 2:1.

67. A PSA laminate according to any of Claims 1 to 66 wherein said PSA laminate has improved peel adhesion (N/25mm) and loop tack (N/25mm) compared to a PSA produced by contacting said filmic polymer with an adhesive comprising at least one adhesive base polymer and at least one tackifier.

68. A PSA laminate according to Claim 67 wherein said PSA laminate has improved shear adhesion (minutes) compared to a PSA produced by contacting said filmic polymer with an adhesive comprising at least one adhesive base polymer and at least one tackifier.

69. A PSA laminate according to any of Claims 1 to 68 wherein a portion of said tackifier migrates into said adhesive base layer of said non-adhesive laminate producing a PSA layer (B/C) thereby yielding said PSA laminate.

70. A PSA laminate according to Claim 69 wherein said portion of said tackifier that migrates into said adhesive base layer is selected from the following ranges which are given in weight percent based on the weight of the tackifier layer (C): 0.1 to 100; 5 to 100; 10 to 100; 15 to 100; 20 to 100; 25 to 100; 30 to 100; 35 to 100; 40 to 100; 50 to 100; 55 to 100; 60 to 100; 65 to 100; 70 to 100; 75 to 100; 80 to 100; 85 to 100; 90 to 100; 95 to 100; 0.1 to 90; 5 to 90; 10 to 90; 15 to 90; 20 to 90; 25 to 90; 30 to 90; 35 to 90; 40 to 90; 45 to 90; 50 to 90; 55 to 90; 60 to 90; 65 to 90; 70 to 90; 75 to 90; 80 to 90; 85 to 90; 0.1 to 80; 5 to 80; 10 to 80; 15 to 80; 20 to 80; 25 to 80; 30 to 80; 35 to 80; 40 to 80; 45 to 80; 50 to 80; 55 to 80; 60 to 80; 65 to 80; 70 to 80; 75 to 80; 0.1 to 70; 5 to 70; 10 to 70; 15 to 70; 20 to 70; 25 to 70; 30 to 70; 35 to 70; 40 to 70; 45 to 70; 50 to 70; 55 to 70; 60 to 70; 65 to 70; 0.1 to 60; 5 to 60; 10 to 60; 15 to 60; 20 to 60; 25 to 60; 30 to 60; 35 to 60; 40 to 60; 45 to 60; 50 to 60; 55 to 60; 0.1 to 50; 5 to 50; 10 to 50; 15 to 50; 20 to 50; 25 to 50; 30 to 50; 35 to 50; 40 to 50; 45 to 50; 0.1 to 40; 5 to 40; 10 to 40; 15 to 40; 20 to 40; 25 to 40; 30 to 100; 35 to 40; 0.1 to 30; 5 to 30; 10 to 30; 15 to 30; 20 to 30; 25 to 30; 0.1 to 20; 5 to 20; 10 to 20, 15 to 20; 0.1 to 10; and 5 to 10.

71. A PSA according to any of Claims 1 to 70 wherein said polymer is a thermoplastic elastomer.

72. A PSA according to any of Claims 1 to 71 wherein the amount of said polymer in said tackifier layer (C) ranges from about 0.1 % by weight to about 10% by weight based on the weight of the tackifier layer (C).

73. A PSA according to Claim 72 wherein the amount of said polymer in said tackifier layer (C) ranges from about 1 % by weight to about 5% by weight based on the weight of the tackifier layer (C).

74. An adhesive construction comprising at least one coextruded non-adhesive laminate and at least one tackifier layer; wherein said coextruded non-adhesive laminate comprises at least one outer filmic layer (A) and at least one adhesive base layer (B); wherein said outer filmic layer (A) comprises at least one filmic polymer; wherein said adhesive base layer (B) comprises at least one adhesive base polymer; and wherein said tackifier layer is applied to the adhesive base layer side of said non-adhesive laminate and wherein the at least one tackifier layer (C) comprises at least one tackifier and at least one polymer.

75. An adhesive construction according to Claim 74 wherein said tackifier migrates into the non-adhesive laminate to produce said adhesive construction.

76. An adhesive construction according to Claim 74 or 75 wherein said adhesive construction has improved peel adhesion (N/25 mm) and loop tack (N/25 mm) compared to an adhesive construction produced by contacting said filmic polymer with an adhesive comprising at least one adhesive base polymer and at least one tackifier.

77. An adhesive construction according to Claim 75 wherein said adhesive construction has improved shear adhesion (min) compared to an adhesive construction produced by contacting said filmic polymer with an adhesive comprising at least one adhesive base polymer and at least one tackifier.

78. An adhesive construction according to any of Claims 74 to 77 further comprising at least one layer selected from the group consisting of at least one barrier layer, at least one overlaminate layer, at least one release liner, at least one tie layer, and at least one primer layer.

79. An adhesive construction according to any of Claims 74 to 78 wherein said filmic polymer is selected from the group consisting of polystyrenes, polyolefins, polyamides, polyesters, polycarbonates, polyurethanes, polyacrylates, polyvinyl alcohols, polyesters, functional polyesters, poly(ethylene vinyl alcohols), polyether block polyamides, polyvinyl acetates, and mixtures thereof.

80. An adhesive construction according to Claim 79 wherein said filmic polymer is at least one selected from the group consisting of polyethylene, polypropylene and ethylene-propylene copolymer.

81. An adhesive construction according to Claim 80 wherein the melt flow rate (MFR) of polyethylene used in said outer filmic layer ranges from about 0.1 to about 15 g/10 minutes measured at 190°C using a 2.16 kg weight.

82. An adhesive construction according to Claim 81 wherein the melt flow rate (MFR) of polypropylene used in said outer filmic layer ranges from about 0.1 to about 20 g/10 minutes measured at 230°C using a 2.16 kg weight.

83. An adhesive construction according to any of Claims 74 to 82 wherein said outer filmic layer has a thickness of about 10 µm to about 200 µm.

84. An adhesive construction according to any of Claims 74 to 83 wherein said adhesive base polymer is at least one selected from the group consisting of at least one random copolymer adhesive base material, at least one block copolymer adhesive base polymer, and at least one natural or synthetic rubber.

85. An adhesive construction according to Claim 84 wherein said random copolymer adhesive base material is selected from the group consisting of copolymers based upon acrylate and/or methacrylate copolymers, α-olefin copolymers, silicone-copolymers, and chloroprene/acrylonitrile copolymers.

86. An adhesive construction according to Claim 84 wherein said block copolymer adhesive base polymer is selected from the group consisting of linear block copolymers, branched block copolymers, di-block copolymers, tri-block copolymers, tetra-block copolymers, multi-block copolymers, star block copolymers, grafted, and radial block copolymers.

87. An adhesive construction according to any of Claims 74 to 83 wherein said adhesive base polymer comprises at least one thermoplastic elastomer (TPE) selected from the group consisting of linear, branched, graft or radial block copolymers.

88. An adhesive construction according to Claim 86 wherein di-block copolymers are selected from the group consisting of styrene-butadiene (SB), styrene-isoprene (SI), and the hydrogenated derivatives thereof.

89. An adhesive construction according to Claim 86 wherein tri-block polymers, tetra-block polymers, and multi-block polymers and are selected from the group consisting of styrene-butadiene-styrene (SBS), styrene-isoprene-styrene (SIS), α-methylstyrene-butadiene-α-methylstyrene, α-methylstyrene-isoprene-α-methylstyrene, styrene-isoprene-butadiene-styrene (SIBS), styrene-ethylene/propylene-styrene (SEPS), styrene-ethylene/propylene (SEP)ₓ, and derivatives thereof.

90. An adhesive construction according to Claim 84 wherein said block copolymers are hydrogenated.

91. An adhesive construction according to any of Claims 74 to 83 wherein said adhesive base polymer is a high cohesive strength polymer selected from the group consisting of styrene block copolymers and isobutylene copolymers.

92. An adhesive construction according to any of Claims 74 to 91 wherein said adhesive base layer has a thickness ranging from about 1 µm to about 60 µm.

93. An adhesive construction according to any of Claims 74 to 92 wherein said tackifier is at least one selected from the group consisting of rosin-based and hydrogenated rosin-based tackifiers, hydrocarbon-based and hydrogenated hydrocarbon-based tackifiers, phenolic-based tackifiers, terpene-based tackifiers, terpene phenolic-based tackifiers, styrenated terpene-based tackifiers, hydrogenated terpene-based tackifiers, polyester-based tackifiers, pure monomer aromatic-based tackifiers, aromatic acrylic-based tackifiers, liquid resin type tackifiers, and functionalized type tackifiers, mixtures, and hydrogenated derivatives thereof.

94. An adhesive construction according to Claim 93 wherein said tackifier is a hydrogenated pure monomer aromatic-based tackifier.

95. An adhesive construction according to any of Claims 74 to 94 wherein said tackifier layer comprises at least one tackifier in an amount of about 50% to about 90% by weight.

96. An adhesive construction according to any of Claims 74 to 95 wherein said tackifier layer has a thickness of about 2 µm to about 150 µm.

97. An adhesive construction according to any of Claims 74 to 96 wherein said tackifier layer (C) is not a PSA.

98. An adhesive construction according to any of Claims 74 to 97 wherein said adhesive construction has a thickness of about 35 to about 400 µm.

99. An adhesive construction according to any of Claims 74 to 98 wherein said portion of said tackifier migrates into said adhesive base layer of said non-adhesive laminate producing a PSA layer (B/C) thereby yielding said adhesive construction.

100. An adhesive construction according to Claim 99 wherein said portion of said tackifier that migrates into said adhesive base layer is selected from the following ranges which are given in weight percent based on the weight of the tackifier layer (C): 0.1 to 100; 5 to 100; 10 to 100; 15 to 100; 20 to 100; 25 to 100; 30 to 100; 35 to 100; 40 to 100; 50 to 100; 55 to 100; 60 to 100; 65 to 100; 70 to 100; 75 to 100; 80 to 100; 85 to 100; 90 to 100; 95 to 100; 0.1 to 90; 5 to 90; 10 to 90; 15 to 90; 20 to 90; 25 to 90; 30 to 90; 35 to 90; 40 to 90; 45 to 90; 50 to 90; 55 to 90; 60 to 90; 65 to 90; 70 to 90; 75 to 90; 80 to 90; 85 to 90; 0.1 to 80; 5 to 80; 10 to 80; 15 to 80; 20 to 80; 25 to 80; 30 to 80; 35 to 80; 40 to 80; 45 to 80; 50 to 80; 55 to 80; 60 to 80; 65 to 80; 70 to 80; 75 to 80; 0.1 to 70; 5 to 70; 10 to 70; 15 to 70; 20 to 70; 25 to 70; 30 to 70; 35 to 70; 40 to 70; 45 to 70; 50 to 70; 55 to 70; 60 to 70; 65 to 70; 0.1 to 60; 5 to 60; 10 to 60; 15 to 60; 20 to 60; 25 to 60; 30 to 60; 35 to 60; 40 to 60; 45 to 60; 50 to 60; 55 to 60; 0.1 to 50; 5 to 50; 10 to 50; 15 to 50; 20 to 50; 25 to 50; 30 to 50; 35 to 50; 40 to 50; 45 to 50; 0.1 to 40; 5 to 40; 10 to 40; 15 to 40; 20 to 40; 25 to 40; 30 to 100; 35 to 40; 0.1 to 30; 5 to 30; 10 to 30; 15 to 30; 20 to 30; 25 to 30; 0.1 to 20; 5 to 20; 10 to 20, 15 to 20; 0.1 to 10; and 5 to 10.

101. An adhesive construction according to any of Claims 74 to 100 wherein said polymer is a thermoplastic elastomer.

102. An adhesive construction according to any of Claims 74 to 101 wherein said amount of said polymer in said tackifier layer (C) ranges from about 0.1 % by weight to about 10% by weight based on the weight of the tackifier layer (C).

103. An adhesive construction according to Claim 102 wherein the amount of said polymer in said tackifier layer (C) ranges from about 1% by weight to about 5% by weight based on the weight of the tackifier layer (C).

104. A pressure sensitive adhesive (PSA) laminate comprising:
a. at least one outer filmic layer (A) comprising at least one filmic polymer;
b. at least one adhesive base layer (B) comprising at least one adhesive base polymer; and
c. at least one tackifier layer (C) comprising at least one tackifier and at least one polymer;
wherein said pressure sensitive adhesive laminate is obtainable by co-extruding said outer filmic layer (A) with said adhesive base layer (B) to produce a non-adhesive laminate and applying said tackifier layer (C) to the adhesive base layer side of said non-adhesive laminate to produce said PSA laminate; and wherein said filmic polymer is at least one selected from the group consisting of polyethylene or polypropylene; wherein said adhesive base layer is a least one selected from the group consisting of a SEBS block copolymer or a (SEP)ₓ block copolymer; and wherein said tackifier comprises hydrogenated aromatic resins.

105. A pressure sensitive adhesive (PSA) laminate comprising:
a. at least one outer filmic layer (A) comprising at least one filmic polymer;
b. at least one adhesive base layer (B) comprising at least one adhesive base polymer; and
c. at least one tackifier layer (C) comprising at least one tackifier and at least one polymer;
wherein said pressure sensitive adhesive laminate is obtainable by co-extruding said outer filmic layer (A) with said adhesive base layer (B) to produce a non-adhesive laminate and applying said tackifier layer (C) to the adhesive base layer side of said non-adhesive laminate to produce said PSA laminate; and wherein a portion of said tackifier migrates into said adhesive base layer of said non-adhesive laminate producing a PSA layer (B/C) thereby yielding said PSA laminate.

106. A pressure sensitive adhesive (PSA) laminate comprising:
a. at least one outer filmic layer (A) comprising at least one filmic polymer;
b. at least one adhesive base layer (B) comprising at least one adhesive base polymer; and
c. at least one tackifier layer (C) comprising at least one tackifier and at least one polymer;
wherein said pressure sensitive adhesive laminate is obtainable by co-extruding said outer filmic layer (A) with said adhesive base layer (B) to produce a non-adhesive laminate and applying said tackifier layer (C) to the adhesive base layer side of said non-adhesive laminate to produce said PSA laminate; and wherein a portion of said tackifier migrates into said adhesive base layer of said non-adhesive laminate producing a PSA layer (B/C) thereby yielding said PSA laminate; and wherein said PSA laminate has improved peel adhesion (N/25mm) and loop tack (N/25mm) compared to a PSA produced by contacting said filmic polymer with an adhesive comprising at least one adhesive base polymer and at least one tackifier.

107. A process to produce a PSA laminate comprising co-extruding at least one outer filmic layer (A) comprising at least one filmic polymer and at least one adhesive base layer (B) comprising at least one adhesive base polymer to produce said non-adhesive laminate and applying at least one tackifier layer (C) to said adhesive base layer (B) of said non-adhesive laminate to produce said PSA laminate.

108. A process according to Claim 107 wherein said tackifier layer is applied by a method selected from the group consisting of slot die coating, roll axis coating, curtain coating, knife-over-roll coating, and spray coating.

109. A process according to Claim 107 or 108 wherein said non-adhesive laminate is heated prior to, subsequent to, or at the time when the tackifier is applied.

110. A process according to any of claims 107 to 109 wherein the tackifier layer is a hot melt composition, a water-based dispersion or solvent-based solution.

111. A process according to any of Claims 107 to 110 wherein a portion of said tackifier layer migrates into said adhesive base layer of said non-adhesive laminate producing a PSA layer (B/C) thereby yielding said PSA laminate.

112. An article comprising the PSA laminate of any of Claims 1 to 73 or the adhesive construction of any of Claims 74 to 103.

113. An article according to Claim 112, which article is a label.

114. A label according.to Claim 113 wherein said label can be selected from filmic labels and filmic labels with a release liner.

115. A label according to Claim 114 wherein said label is a packaging label or specialty label.

116. A label according to Claim 115 wherein said packaging label is selected from the group consisting of labels used for packaging of beverages, food products, health and personal care products, pharmaceuticals, industrial chemicals, household chemicals or retail products.

117. A label according to Claim 115 wherein said speciality label is selected from the group consisting of repositionable labels, removable labels, resealable labels, no-look labels, deep freezer labels and security labels.

118. An article according to Claim 112, which article is a tape.

119. A tape according to Claim 118 wherein said tape is a multi-purpose tape or specialty tapes.

120. A tape according to Claim 119 wherein said multi-purpose tape is selected selected from the group consisting of packaging and transportation tapes; paint and spray masking tapes; consumer and office tapes; and bonding and fastening tapes.

121. A tape according to Claim 119 wherein said specialty tape is selected from the group consisting of surface protection tapes; electrical insulation tapes; binding, reinforcing and marking tapes; splice tapes; HVAC-sealing tapes; medical application tapes; automotive applications tapes; electronic tapes; safety or reflective tapes; and diaper closure tapes.

122. An article according to Claim 112, which article is a film.

123. A film according to Claim 122 wherein said film is selected from the group consisting of adhesive films, barrier films, protective films, and cling films.

124. A film according to Claim 123 wherein said adhesive film is at least one selected from the group consisting of pressure sensitive adhesive films, heat activated adhesive films, single and double-sided adhesive layers, carpet underlayment, roofing underlayment, clear or colored films, food contact adhesive films, and backing layer films.

125. A film according to Claim 124 wherein said backing layer film is selected from the group consisting of backing layer films used to support a drug matrix, multi-purpose backing layer films, or substrate-specific backing layer films.

126. A film according to Claim 125 wherein said substrate-specific backing layer film is selected from the group consisting of backing layer films for nonwovens, glass, paper, cotton, mineral wool, polyethylene, polypropylene, nylon, polyester, polyurethane foams/sheets, and acrylic adhesives.

127. A film according to Claim 123 wherein said barrier film is selected from the group consisting of flexible food packaging; film barriers to odor, organic aromas and flavors, moisture, oxygen, and other gases; heat and impulse sealable barrier films, printable barrier films, corona treated barrier films, ostomy appliances, pharmaceutical blister packs, cap liners, bags, and textile lamination for protective clothing.

128. A film according to Claim 123 wherein said protective films are films laminated to solid structures.

129. A film according to Claim 128 wherein said films laminated to solid structures are selected from the group consisting of protective films on corrugated steel pipe to improve corrosion and abrasion resistance, masking protective films for painted surfaces, reflective films for interior or exterior glass, anti-shatter films for window glass, and glass tinting films.

130. A film according to Claim 123 wherein said cling films are selected from the group consisting of food packaging, industrial applications, and consumer sealable applications.

131. A PSA laminate according to Claims 1, 2, 74, 104, 105, or 106 wherein the adhesive properties of said PSA laminate can be controlled using the absolute and relative thicknesses of the adhesive base polymer layer (B) and tackifier layer (C).
